(19) Europäisches Patentamt
European Patent Office
Office européen des brevets

(11) EP 2 003 644 A2

(12) # EUROPEAN PATENT APPLICATION
published in accordance with Art. 153(4) EPC

(43) Date of publication:
**17.12.2008 Bulletin 2008/51**

(21) Application number: **07707613.1**

(22) Date of filing: **29.01.2007**

(51) Int Cl.:
***G11B 7/244*** *(2006.01)* ***B41M 5/26*** *(2006.01)*
***C09B 1/22*** *(2006.01)* ***C09B 1/32*** *(2006.01)*
***C09B 1/503*** *(2006.01)* ***C09B 23/00*** *(2006.01)*
***C09B 25/00*** *(2006.01)* ***C09B 29/08*** *(2006.01)*
***C09B 53/00*** *(2006.01)* ***C09B 55/00*** *(2006.01)*
***G11B 7/24*** *(2006.01)*

(86) International application number:
**PCT/JP2007/051382**

(87) International publication number:
**WO 2007/122830 (01.11.2007 Gazette 2007/44)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.03.2006 JP 2006080386**
**28.09.2006 JP 2006265136**

(71) Applicant: **Fujifilm Corporation**
**Tokyo 106-0031 (JP)**

(72) Inventors:
- **SETO, Nobuo**
**Minami-ashigara-shi**
**Kanagawa 250-0193 (JP)**
- **MIKOSHIBA, Hisashi**
**Minami-ashigara-shi**
**Kanagawa 250-0193 (JP)**
- **SHIBATA, Michihiro**
**Odawara-shi**
**Kanagawa 250-0001 (JP)**

(74) Representative: **HOFFMANN EITLE**
**Patent- und Rechtsanwälte**
**Arabellastrasse 4**
**81925 München (DE)**

(54) **OPTICAL RECORDING MEDIUM AND VISIBLE INFORMATION RECORDING METHOD**

(57) The present invention relates to an optical recording medium comprising a visible information recording layer comprising a dye denoted by the following general formula (I) on a support. In general formula (I), A denotes a substituted or unsubstituted heterocyclic group, substituted aliphatic group, or substituted or unsubstituted carbon ring group, and B denotes a substituted or unsubstituted heterocyclic group or a substituted or unsubstituted aryl group. The optical recording medium may further comprise a recording layer capable of recording and/or reproducing information by irradiation of a laser beam. The present invention further relates to a method of recording visible information on the visible information recording layer of the optical recording medium, wherein the visible information is recorded by using the same laser bean as that used in recording on the above recording layer.

[Fig. 1]

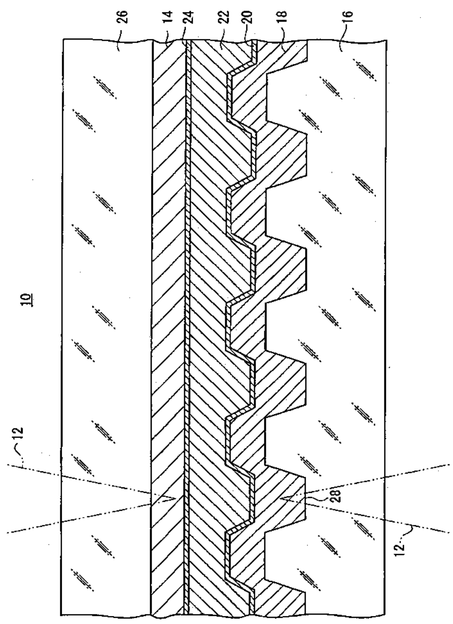


EP 2 003 644 A2

**Description**

## CROSS-REFERENCE TO RELATED APPLICATIONS

This application claims the benefit of priority to Japanese Patent Application No. 2006-80386 filed on March 23, 2006 and Japanese Patent Application No. 2006-265136 filed on September 28, 2006, which are expressly incorporated herein by reference in their entirety.

## TECHNICAL FIELD

The present invention relates to an optical recording medium, and more particularly, to an optical recording medium having a recording layer for recording music data and the like, and a visible information recording layer for recording visible information to identify recorded data. The present invention further relates to a method of recording visible information on the optical recording medium.

## TECHNICAL BACKGROUND

Optical information recording media (optical disks) on which information can be recorded once by means of a laser beam are known. Such optical disks include recordable CDs (known as "CD-Rs") and recordable digital versatile disks (known as "DVD-Rs").
Optical disks, having a label on which visible information (such as the song titles of music data recorded on the recording side, titles for identifying recorded data, and the like) is printed that is adhered on the opposite side from the side on which music data and the like are recorded, are known. Such optical disks are prepared by using a printer or the like to print in advance titles and the like on a round label sheet, which is then adhered on the opposite side from the optical disk recording side.
However, in addition to an optical disk drive, a printer is required when preparing an optical disk with a label on the surface of which are recorded desired visible images such as titles. Accordingly, a complex operation is required, for example, after using an optical disk drive to record data on the recording surface of a given optical disk, it is necessary to remove the optical disk from the optical disk drive and attach the label sheet that has been printed by the printer separately prepared.
Accordingly, optical recording media have been proposed that permit the use of laser markers on the opposite surface from the recording surface to vary the contrast between the surface and the background and indicate information (for example, see Japanese Unexamined Patent Publication (KOKAI) Heisei No. 11-66617, which is expressly incorporated herein by reference in its entirety). The use of such a method permits the printing of a desired image on the label surface of an optical disk with an optical disk drive without separate preparation of printers and the like. However, this method affords low sensitivity and requires the use of a high-power gas laser such as a carbon dioxide gas laser. The visible image that is formed by such a laser beam is of low contrast and affords poor visibility. Further, there are problems in that when manufacturing a coating-use ink employing a dye for image formation, the dye does not have adequate solubility in the ink solvent, and the dye in the image-forming layer crystallizes over long periods of time.

## DISCLOSURE OF THE INVENTION

Under such circumstances, the object of the present invention is to provide an optical recording medium permitting the recording of visible information with high contrast and good visibility, and more particularly, to provide an optical recording medium permitting the recording of visible information with high contrast and good visibility with the laser beam that is used to record information in the recording layer.
The present inventors conducted extensive research into achieving the above-stated objects, and discovered that by employing a prescribed dye in the visible information recording layer of an optical recording medium, it was possible to form visible information with high contrast and good visibility.
The present invention relates to an optical recording medium comprising a visible information recording layer on a support, wherein said visible information recording layer comprises a dye denoted by the following general formula (I).

[Chem. 1] **A=N-B** General formula (I)

[In general formula (I), A is a substituted or unsubstituted heterocyclic group, substituted aliphatic group, or substituted or unsubstituted carbon ring group, and B is a substituted or unsubstituted heterocyclic group or a substituted or unsubstituted aryl group.]
In general formula (I), the group denoted by:

[Chem. 2] A=

may be denoted by the following formula (A-1), (A-2), (A-3), (A-4), (A-5), (A-6), (A-7), (A-8), (A-9), (A-10), or (A-11).

[Chem. 3]

(A-1)

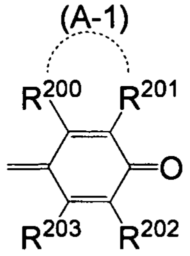

(A-2)

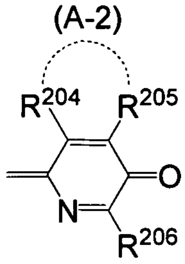

(A-3)

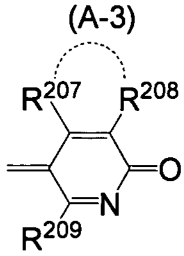

(A-4)

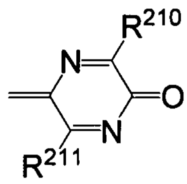

(A-5)

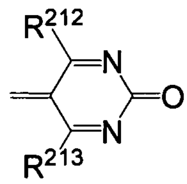

(A-6)

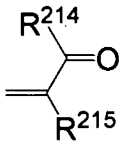

(A-7)

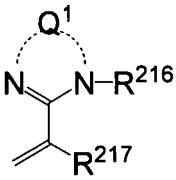

(A-8)

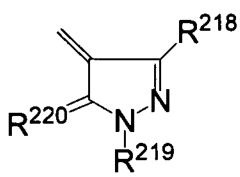

(A-9)

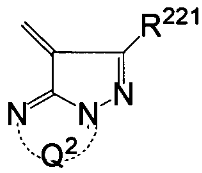

(A-10)

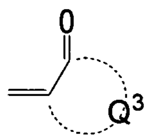

(A-11)

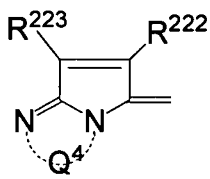

[In the above, $R^{200}$ to $R^{223}$ are each independently a hydrogen atom or a substituent, $R^{200}$ and $R^{201}$, $R^{204}$ and $R^{205}$, and $R^{207}$ and $R^{208}$ may be bonded together to form a ring, $Q^1$ denotes a group of nonmetal atoms required for formation of a ring with two nitrogen atoms adjacent to $Q^1$, $Q^2$ denotes a group of nonmetal atoms required for formation of a ring with two nitrogen atoms adjacent to $Q^2$, $Q^4$ denotes a group of nonmetal atoms required for formation of a ring with two nitrogen atoms adjacent to $Q^4$, and $Q^3$ denotes a group of nonmetal atoms required for formation of a ring with two carbon atoms adjacent to $Q^3$.]

The substituents denoted by $R^{200}$ to $R^{223}$ may be each independently an aliphatic group, aryl group, heterocyclic group, acyl group, acylamino group, aliphatic oxy group, aryloxy group, aliphatic oxycarbonyl group, carbamoyl group, aliphatic sulfonyl group, arylsulfonyl group, sulfamoyl group, aliphatic sulfonamide group, arylsulfonamide group, amino group, aliphatic amino group, arylamino group, heterocyclic amino group, carbamoylamino group, sulfamoylamino group, hydroxy group, or cyano group.

In general formula (I), the group denoted by:

[Chem. 4] B-

may be a group denoted by the following formula (B-1), (B-2), (B-3), (B-4), (B-5), (B-6), (B-7), (B-8) or (B-9).

[Chem. 5]

(B-1)

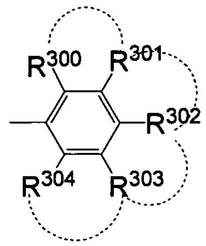

(B-2)

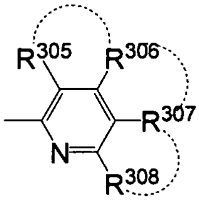

(B-3)

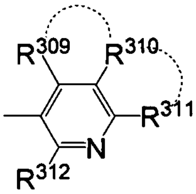

(B-4)

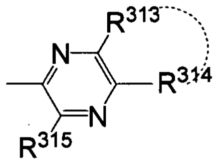

(B-5)

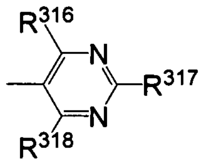

(B-6)

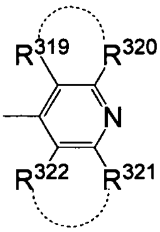

(B-7)

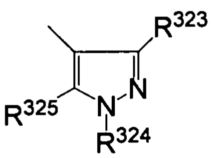

(B-8)

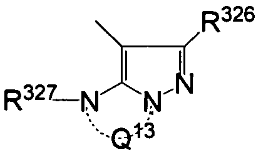

(B-9)

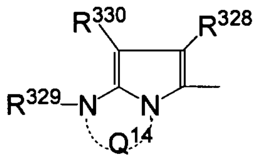

[In the above, $R^{300}$ to $R^{330}$ are each independently a hydrogen atom or a substituent, $R^{300}$ and $R^{301}$, $R^{301}$ and $R^{302}$, $R^{302}$ and $R^{303}$, $R^{303}$ and $R^{304}$, $R^{305}$ and $R^{306}$, $R^{306}$ and $R^{307}$, $R^{307}$ and $R^{308}$, $R^{309}$ and $R^{310}$, $R^{310}$ and $R^{311}$, $R^{313}$ and $R^{314}$, $R^{319}$ and $R^{320}$, and $R^{321}$ and $R^{322}$ may be bonded together to form a ring, $Q^{13}$ denotes a group of nonmetal atoms required for formation of a ring with two nitrogen atoms adjacent to $Q^{13}$, and $Q^{14}$ denotes a group of nonmetal atoms required for formation of a ring with two nitrogen atoms adjacent to $Q^{14}$.]

The substituents denoted by $R^{300}$ to $R^{330}$ may be each independently an aliphatic group, aryl group, acyloxy group, acylamino group, aliphatic oxy group, aliphatic sulfonyloxy group, arylsulfonyloxy group, aliphatic sulfonamide group, arylsulfonamide group, amino group, aliphatic amino group, arylamino group, aliphatic oxycarbonylamino group, aryloxycarbonylamino group, heterocyclic oxycarbonylamino group, hydroxy group, cyano group, sulfo group, carbamoylamino group, or sulfamoylamino group.

The dye denoted by said general formula (I) may be a dye denoted by the following general formula (100).

[Chem. 6]

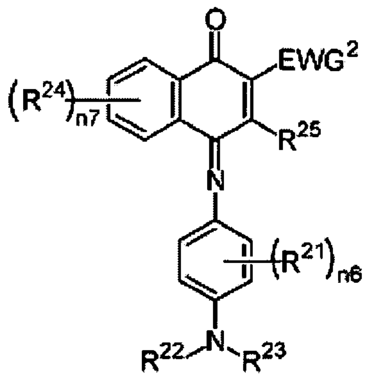

General formula (100)

[In general formula (100), $EWG^2$ denotes an electron-withdrawing group, $R^{21}$, $R^{22}$, $R^{23}$, and $R^{24}$ each independently denote a monovalent substituent, $R^{25}$ denotes a hydrogen atom or a monovalent substituent, n6 and n7 each independently denote an integer ranging from 0 to 4.]

The dye denoted by said general formula (I) may be a dye denoted by the following general formula (101).

[Chem. 7]

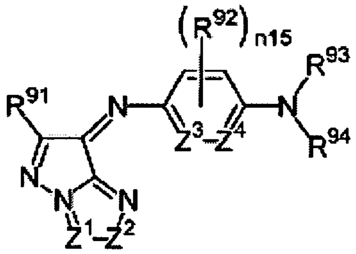

General formula (101)

[In general formula (101), $R^{91}$ denotes a hydrogen atom or a monovalent substituent, $R^{93}$ and $R^{94}$ each independently denote a substituted or unsubstituted alkyl group, substituted or unsubstituted aryl group, or substituted or unsubstituted heterocyclic group, $R^{92}$ denotes a monovalent substituent, n15 denotes an integer ranging from 0 to 2, among $Z^1$ and $Z^2$, one denotes =N-, and the other denotes $=C(R^{95})-$, $Z^3$ and $Z^4$ each independently denote =N- or $=C(R^{96})-$, $R^{95}$ and $R^{96}$ each independently denote a hydrogen atom or a monovalent substituent.]

The dye denoted by said general formula (I) may be a dye denoted by the following general formula (101).

[Chem. 8]

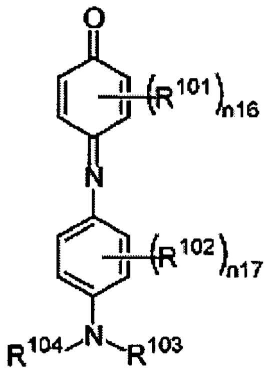

General formula (102)

[In general formula (102), $R^{103}$ and $R^{104}$ each independently denote a substituted or unsubstituted alkyl group, substituted or unsubstituted aryl group, or substituted or unsubstituted heterocyclic group, $R^{101}$ and $R^{102}$ each independently denote a monovalent substituent, n16 and n17 each independently denote an integer ranging from 0 to 4.]

The dye denoted by said general formula (I) may be a dye denoted by the following general formula (103).

[Chem. 9]

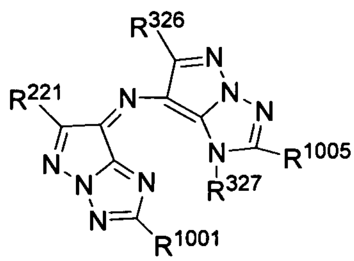

General formula (103)

[In general formula (103), $R^{221}$, $R^{326}$, $R^{327}$, $R^{1001}$, and $R^{1005}$ each independently denote a hydrogen atom or substituent.]

The dye denoted by said general formula (I) may be a dye denoted by the following general formula (104).

[Chem. 10]

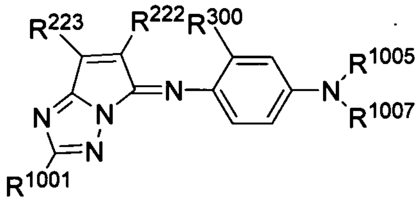

General formula (104)

[In general formula (104), $R^{222}$, $R^{223}$, $R^{300}$, $R^{1001}$, and $R^{1005}$ each independently denote a hydrogen atom or a substituent, and $R^{1007}$ denotes a substituent.]

The dye denoted by said general formula (I) may be a dye denoted by the following general formula (105).

[Chem. 11]

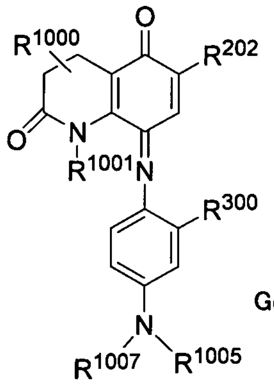

General formula (105)

[In general formula (105), $R^{202}$, $R^{300}$, $R^{1001}$, and $R^{1005}$ each independently denote a hydrogen atom or a substituent, $R^{1000}$ and $R^{1007}$ each independently denote a substituent.]

The dye denoted by said general formula (I) may be a dye denoted by the following general formula (106).

[Chem. 12]

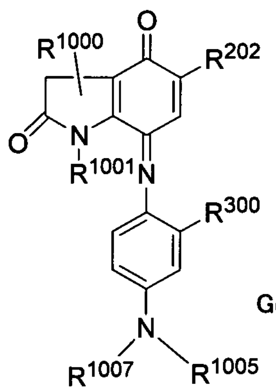

General formula (106)

[In general formula (106), $R^{202}$, $R^{300}$, $R^{1001}$, and $R^{1005}$ each independently denote a hydrogen atom or a substituent, $R^{1000}$ and $R^{1007}$ each independently denote a substituent.]

The optical recording medium may further comprise a recording layer capable of recording and/or reproducing information by irradiation of a laser beam.
The optical recording medium may comprise a first support, said recording layer, a reflective layer, said visible information recording layer, and a second support in this order.
The optical recording medium may be disk-shaped.
Another aspect of the present invention relates to a method of recording visible information on the visible information recording layer of said optical recording medium, wherein the visible information is recorded by using the same laser bean as that used in recording on the recording layer capable of recording and/or reproducing information by irradiation of a laser beam.
Another aspect of the present invention relates to a method of recording visible information on the visible information recording layer of said optical recording medium with disk-shape, wherein the visible information is recorded by using a laser beam that oscillates in a radial direction of the optical recording medium as well as is irradiated plural times on approximately identical paths.
According to the present invention, an optical recording medium permitting the recording of visible information with high contrast and good visibility can be provided. Further, the dye employed in the present invention has adequate solubility in the solvent, so the optical recording medium is readily manufactured. Since the visible information recording layer comprising the dye has good stability over time, an optical recording medium with good storage properties can be provided. Further, the dye is suited to systems of forming images by new recording methods differing from common digital data recording, and permits the formation of visible information with high contrast, sharpness, and good resistance to light in such systems.

## BEST MODE FOR CARRYING OUT THE INVENTION

The optical recording medium of the present invention is an optical recording medium comprising a visible information recording layer on a support, wherein said visible information recording layer comprises a dye denoted by the following general formula (I).

[Chem. 13] A=N-B  Genera formula (I)

[In general formula (I), A is a substituted or unsubstituted heterocyclic group, substituted aliphatic group, or substituted or unsubstituted carbon ring group, and B is a substituted or unsubstituted heterocyclic group or a substituted or unsubstituted aryl group.]
Details of the dye denoted by general formula (I) will be described below. In the following descriptions,

[Chem. 14]  A=

may be referred to as "A moiety", and

[Chem. 15]  B-

may be referred to as "B moiety".
In general formula (I), the heterocyclic group denoted by A may be substituted or unsubstituted, and may be condensed. A substituted or unsubstituted heterocyclic group having 2 to 30 total carbon atoms in the form of a five-membered to seven membered ring is preferable. Of these, the heterocyclic group denoted by A is preferably a heterocycle in the form of what is known as an acidic nucleus, in technical fields of a cyanine dye and oxonol dye. Acidic nuclei are described in James ed., The Theory of the Photographic Process (4th Ed., Macmillan Corp., 1977, p. 198). Specific examples are: pyrazole-5-one, pyrazolidine-3,5-dione, imidazoline-5-one, hydantoin, 2 or 4-thiohydantoin, 2-iminooxazolidine-4-one, 2-oxazoline-5-one, 2-thiooxazoline-2,4-dione, isorhodanine, rhodanine, thiophen-3-one, thiophen-3-one-1,1-dioxide, indoline-2-one, indoline-3-one, 2-oxoindazolium, 5,7-dioxo-6,7-dihydrothiazolo[3,2-a]pyrimidine, 3,4-dihydroisoquinoline-4-one, 1,3-dioxane-4,6-dione (such as Meldrum's acid), barbituric acid, 2-thiobarbituric acid, coumarin-2,4-dione, indazoline-2-one, pyrido[1,2-a]pyrimidine-1,3-dione, pyrazolo[15-b]quinazolone, pyrazolopyridone, and five or six-membered carbon rings (such as hexane-1,3-dione, pentane-1,3-dione, and indane-1,3-dione) , each of which is optionally substituted. Preferable nuclei are: pyrazole-5-one, barbituric acid, 2-thiobarbituric acid, and 1,3-dioxane-4,6-dione.
Further examples of the heterocyclic group denoted by A are the residues of compounds known as color couplers in the technical field of silver salt photography. Examples of color couplers are: pyrazolones, 1H-imidazo[1,2-b]pyrazole rings, 1H-pyrazolo[5,1-C][1,2,4]triazoles, and 1H-pyrazolo[1,5-b][1,2,4]triazoles.
The aliphatic group in the substituted aliphatic group denoted by A may be a linear, branched chain, or cyclic

saturated or unsaturated, for example, may denote an alkyl group, alkenyl group, cycloalkyl group, or cycloalkenyl group; any such group in which "=N" can be substituted for a carbon atom will suffice. Specific examples are methylene groups of acetylacetone and pivaloylacetoanilide.

The carbon ring group denoted by A may be substituted or unsubstituted and may be saturated or unsaturated. The carbon ring group is preferably 5 to 7 membered.

When A denotes a substituted heterocyclic group, substituted aliphatic group, or substituted carbon ring group, the substituent can be a substitutable group. Examples are the same substituents as those given by way of example for the substituents described further below. Preferable examples are: a heterocyclic group, acyl group, acyloxy group, acylamino group, aliphatic oxy group, aryloxy group, heterocyclic oxy group, aliphatic oxycarbonyl group, aryloxycarbonyl group, heterocyclic oxycarbonyl group, carbamoyl group, aliphatic sulfonyl group, arylsulfonyl group, heterocyclic sulfonyl group, aliphatic sulfonyloxy group, arylsulfonyloxy group, heterocyclic sulfonyloxy group, sulfamoyl group, aliphatic sulfonamide group, arylsulfonamide group, heterocyclic sulfonamide group, aliphatic oxycarbonylamino group, aryloxycarbonylamino group, heterocyclic oxycarbonylamino group, aliphatic sulfinyl group, arylsulfinyl group, hydroxy group, cyano group, carboxyl group, sulfamoylamino group, halogen atom, sulfamoylcarbamoyl group, and carbamoylsulfamoyl group.

The groups denoted by general formulas (A-1) to (A-11) are examples of groups that are preferable as A moiety. Below, $R^{1000}$ denotes a substituent and each of $R^{1001}$ and $R^{1002}$ independently denotes a hydrogen atom or substituent. Examples of the substituents are the various substituents described further below.

[Chem. 16]

(A-1)

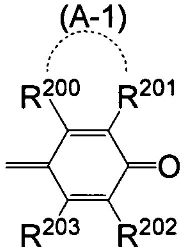

(A-2)

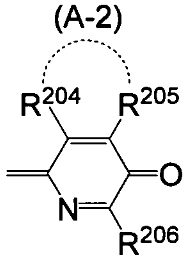

(A-3)

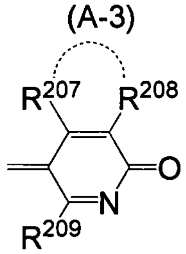

(A-4)

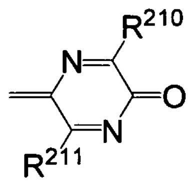

(A-5)

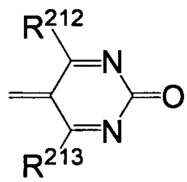

(A-6)

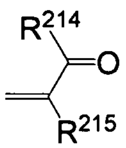

(A-7)

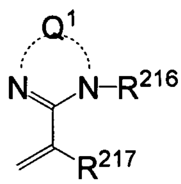

(A-8)

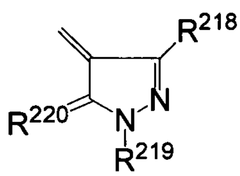

(A-9)

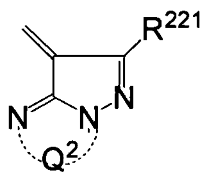

(A-10)

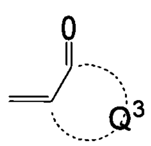

(A-11)

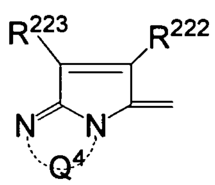

In the above, $R^{200}$ to $R^{223}$ are each independently a hydrogen atom or a substituent. $R^{200}$ and $R^{201}$, $R^{204}$ and $R^{205}$, and $R^{207}$ and $R^{208}$ may be bonded together to form a ring. The ring that is formed is preferably a 5 to 7 membered ring. The above substituents need only be substitutable groups, and may be further substituted. Examples are halogen atoms (such as fluorine, chlorine, and bromine, with chlorine being preferable); aliphatic groups (preferably alkyl groups having a total of 1 to 12 carbon atoms, such as methyl groups, ethyl groups, i-propyl groups, t-butyl groups, octyl groups, and methoxypropyl groups); aryl groups (preferably having a total of 6 to 16 carbon atoms, such as phenyl groups, 1-naphthyl groups, and 4-methoxyphenyl groups); heterocyclic groups (preferably having a total of 1 to 12 carbon atoms, saturated or unsaturated, such as 2-imidazolyl groups and 1-pyrazolyl groups); acyl groups (preferably having a total of 2 to 12

carbon atoms, such as acetyl groups, pivaloyl groups, benzoyl groups, and methoxyacetyl groups); acyloxy groups (preferably having a total of 2 to 12 carbon atoms, such as acetyloxy groups, pivaloyloxy groups, and benzoyloxy groups); acylamino groups (preferably having a total of 2 to 12 carbon atoms, such as acetylamino groups, benzoylamino groups, 2-ethylhexanoylamino groups, and 4-ethoxybenzoyl groups), aliphatic oxy groups (preferably alkoxy groups having a total of 1 to 12 carbon atoms or alkenyloxy groups, such as methoxy groups, butoxy groups, s-butoxy groups allyloxy groups, and 2-butoxyethoxy groups); aryloxy groups (preferably having a total of 6 to 16 carbon atoms, such as phenoxy groups, 1-naphthyloxy groups, and 2-methoxyphenoxy groups); heterocyclic oxy groups (preferably having a total of 1 to 12 carbon atoms, saturated or unsaturated, such as 2-pyridyloxy groups, 3-pyridyloxy groups, and 5-pyrazolyloxy groups); aliphatic oxycarbonyl groups (preferably having a total of 2 to 12 carbon atoms, such as methoxycarbonyl groups, butoxycarbonyl groups, and 2-ethoxycarbonyl groups); aryloxycarbonyl groups (preferably having a total of 6 to 16 carbon atoms, such as phenoxycarbonyl groups); heterocyclic oxycarbonyl groups (preferably having a total of 2 to 12 carbon atoms, saturated or unsaturated, such as 2-pyridyloxycarbonyl groups and 5-pyrazolyloxycarbonyl groups); carbamoyl groups (preferably having a total of 1 to 12 carbon atoms, such as N,N-dimethylcarbamoyl groups and N,N-dimethoxyethoxycarbamoyl groups); aliphatic sulfonyl groups (preferably alkylsulfonyl groups having a total of 1 to 12 carbon atoms, such as methanesulfonyl groups and 2-ethylhexylsulfonyl groups); arylsulfonyl groups (preferably having a total of 6 to 16 carbon atoms, such as benzenesulfonyl groups and 4-ethoxybenzenesulfonyl groups); heterocyclic sulfonyl groups (preferably having a total of 1 to 12 carbon atoms, saturated or unsaturated, such as 4-pyridinesulfonyl groups); aliphatic sulfonyloxy groups (preferably alkylsulfonyloxy groups having a total of 1 to 12 carbon atoms, such as methanesulfonyloxy groups and 2-ethylhexylsulfonyloxy groups); arylsulfonyloxy groups (preferably having a total of 6 to 16 carbon atoms, such as benzenesulfonyloxy groups and 4-ethoxybenzenesulfonyloxy groups); heterocyclic sulfonyloxy groups (preferably having a total of 1 to 12 carbon atoms, saturated or unsaturated, such as 4-pyridinesulfonyloxy groups); sulfamoyl groups (preferably having a total of 0 to 12 carbon atoms, such as N,N-dimethylsulfamoyl groups and N,N-dimethoxyethoxysulfamoyl groups); aliphatic sulfonamide groups (preferably alkylsulfonamide groups having a total of 1 to 12 carbon atoms, such as methanesulfonamide groups and butanesulfonamide groups); arylsulfonamide groups (preferably having a total of 6 to 16 carbon atoms, such as benzenesulfonamide groups and 3-butoxybenzenesulfonamide groups); heterocyclic sulfonamide groups (preferably having a total of 1 to 12 carbon atoms, saturated or unsaturated, such as 3-pyridinesulfonamide groups); amino groups, aliphatic amino groups (preferably alkylamino groups having a total of 1 to 12 carbon atoms or alkenylamino groups, such as dimethylamino groups and di-2-ethylhexylamino groups); arylamino groups (preferably having a total of 6 to 16 carbon atoms, such as anilino groups and 2,4-dichloroanilino groups); heterocyclic amino groups (preferably having a total of 1 to 12 carbon atoms, saturated or unsaturated, such as 2-pyridiylamino groups and 1-morpholinylamino group); aliphatic oxycarbonylamino groups (preferably alkoxycarbonyl amino groups having 2 to 12 carbon atoms, such as methoxycarbonylamino groups, butoxycarbonylamino groups, and 2-methoxyethoxycarbonylamino groups); aryloxycarbonylamino groups (preferably having 7 to 17 carbon atoms, such as phenoxycarbonylamino groups); heterocyclic oxycarbonylamino groups (preferably having a total of 2 to 12 carbon atoms, saturated or unsaturated, such as 2-pyridyloxycarbonylamino groups), aliphatic sulfinyl groups (preferably alkylsulfinyl groups having a total of 1 to 12 carbon atoms, such as methanesulfinyl groups and butanesulfinyl groups); arylsulfinyl groups (preferably having a total of 6 to 16 carbon atoms, such as benzenesulfinyl groups and 4-methoxybenzenesulfinyl groups); aliphatic thio groups (preferably alkylthio groups having a total of 1 to 12 carbon atoms, such as butylthio groups, octylthio groups, and 2-ethoxyethylthio groups); arylthio groups (preferably having a total of 6 to 16 carbon atoms, such as phenylthio groups and 4-methoxyphenylthio groups); hydroxy groups; cyano groups; sulfo groups; carboxyl groups; aliphatic oxyamino groups (preferably alkoxyamino groups having a total of 1 to 12 carbon atoms, such as methoxyamino groups); aryloxyamino groups (preferably having a total of 6 to 16 carbon atoms, such as phenoxyamino groups); carbamoylamino groups (preferably having a total of 1 to 12 carbon atoms, such as dimethylcarbamoylamino groups and dimethoxyethoxycarbamoylamino groups); sulfamoylamino groups (preferably having a total of 0 to 12 carbon atoms, such as dimethylsulfamoylamino groups and dimethoxyethoxysulfamoylamino groups); sulfamoylcarbamoyl groups (preferably having a total of 1 to 12 carbon atoms, such as N,N-dimethylsulfamoylcarbamoyl groups); carbamoylsulfamoyl groups (preferably having a total of 1 to 12 carbon atoms, such as N,N-dibutylcarbamoylsulfamoyl groups); and dialiphatic oxyphosphinyl groups (preferably alkoxyphosphinyl groups having a total of 2 to 12 carbon atoms, such as diethoxyphosphinyl groups). When the dye of general formula (I) forms a polymer such as a dimer or trimer, the substituent may be divalent or greater. Examples of preferable substituents are aliphatic groups, aryl groups, heterocyclic groups, acryl groups, acylamino groups, aliphatic oxy groups, aryloxy groups, aliphatic oxycarbonyl groups, carbamoyl groups, aliphatic sulfonyl groups, arylsulfonyl groups, sulfamoyl groups, aliphatic sulfonamide groups, arylsulfonamide groups, amino groups, aliphatic amino groups, arylamino groups, heterocyclic amino groups, carbamoylamino groups, sulfamoylamino groups, hydroxy groups, and cyano groups.

The above $Q^1$ denotes a group of nonmetal atoms required for formation of a ring with two nitrogen atoms adjacent to $Q^1$. The above $Q^2$ denotes a group of nonmetal atoms required for formation of a ring with two nitrogen atoms adjacent to $Q^2$. The above $Q^4$ denotes a group of nonmetal atoms required for formation of a ring with two nitrogen atoms adjacent to $Q^4$, and $Q^3$ denotes a group of nonmetal atoms required for formation of a ring with two carbon atoms

adjacent to $Q^3$. The rings that are formed are preferably five to seven-membered.

The groups denoted by formulas (A-1) to (A-11) will be described in detail below.

(A-1)

In formula (A-1), $R^{200}$ is preferably a hydrogen atom, aliphatic group, aryl group, heterocyclic group, acyl group, acylamino group, aliphatic oxy group, aliphatic sulfonamide group, arylsulfonamide group, halogen atom, carbamoylamino group, sulfamoylamino group, hydroxy group, or cyano group; more preferably an aliphatic group, acylamino group, aliphatic sulfonamide group, arylsulfonamide group, carbamoylamino group, or sulfamoylamino group; and still more preferably an aliphatic group, acylamino group, or carbamoylamino group.

$R^{201}$ is preferably a hydrogen atom, aliphatic group, acylamino group, aliphatic sulfonamide group, arylsulfonamide group, halogen atom, carbamoylamino group, sulfamoylamino group, or cyano group, and more preferably a hydrogen atom, aliphatic group, halogen atom, or acylamino group.

The ring formed by bonding of $R^{200}$ and $R^{201}$ is preferably a five to seven-membered ring, more preferably a five or six-membered heterocyclic ring or a six-membered aryl.

$R^{202}$ is preferably a hydrogen atom, aliphatic group, heterocyclic group, acyl group, acylamino group, aliphatic oxy group, aliphatic oxycarbonyl group, carbamoyl group, sulfamoyl group, aliphatic sulfonamide group, arylsulfonamide group, amino group, aliphatic amino group, arylamino group, carbamoylamino group, sulfamoylamino group, or cyano group; more preferably a heterocyclic group, acyl group, acylamino group, aliphatic oxycarbonyl group, carbamoyl group, sulfamoyl group, aliphatic sulfonamide group, arylsulfonamide group, carbamoylamino group, or sulfamoylamino group; and particularly preferably, a heterocyclic group, acylamino group, aliphatic oxycarbonyl group, carbamoyl group, carbamoylamino group, or sulfamoyl group.

$R^{203}$ is preferably a hydrogen atom, aliphatic group, acylamino group, or halogen atom, more preferably a hydrogen atom.

The group denoted by formula (A-1) is preferably one of (AA-10) to (AA-19) below; more preferably (AA-10), (AA-11), (AA-12), (AA-13), (AA-14), or (AA-17), and further preferably (AA-10), (AA-11), (AA-13), (AA-14), or (AA-17).

[Chem. 17]

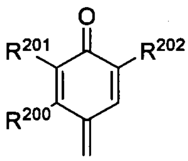
(AA-10)

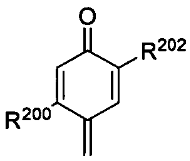
(AA-11)

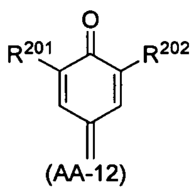
(AA-12)

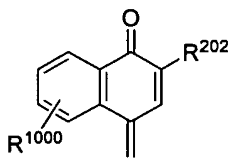
(AA-13)

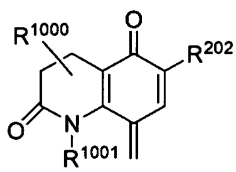
(AA-14)

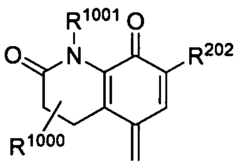
(AA-15)

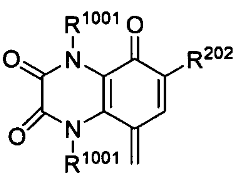
(AA-16)

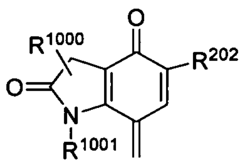
(AA-17)

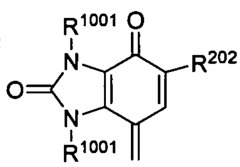
(AA-18)

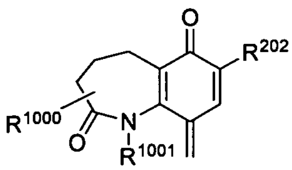
(AA-19)

(A-2)

In formula (A-2), $R^{204}$ is preferably a hydrogen atom, aliphatic group, aryl group, heterocyclic group, acyl group,

acylamino group, aliphatic oxy group, aliphatic sulfonamide group, arylsulfonamide group, halogen atom, carbamoylamino group, sulfamoylamino group, hydroxy group, or cyano group; more preferably an aliphatic group, acylamino group, aliphatic sulfonamide group, arylsulfonamide group, carbamoylamino group, or sulfamoylamino group; and further preferably an aliphatic group, acylamino group, or carbamoylamino group.

$R^{205}$ is preferably a hydrogen atom, aliphatic group, acylamino group, aliphatic sulfonamide group, arylsulfonamide group, halogen atom, carbamoylamino group, sulfamoylamino group, or cyano group, more preferably a hydrogen atom, aliphatic group, halogen atom, or acylamino group.

The ring formed by bonding of $R^{204}$ and $R^{205}$ is preferably a five to seven-membered ring, more preferably a five or six-membered heterocyclic ring or a six-membered aryl.

$R^{206}$ is preferably a hydrogen atom, aliphatic group, heterocyclic group, acyl group, acylamino group, aliphatic oxy group, aliphatic oxycarbonyl group, carbamoyl group, sulfamoyl group, aliphatic sulfonamide group, arylsulfonamide group, amino group, aliphatic amino group, arylamino group, carbamoylamino group, sulfamoylamino group, or cyano group; more preferably a heterocyclic group, acyl group, acylamino group, aliphatic oxycarbonyl group, carbamoyl group, sulfamoyl group, aliphatic sulfonamide group, arylsulfonamide group, carbamoylamino group, or sulfamoylamino group; and further preferably a heterocyclic group, acyl group, acylamino group, aliphatic oxycarbonyl group, carbamoyl group, carbamoylamino group, or sulfamoylamino group.

The group denoted by formula (A-2) is preferably one of (A-20) to (A-29) below; more preferably (A-20), (A-21), (A-24), or (A-27); and further preferably denotes (A-20) or (A-21).

[Chem. 18]

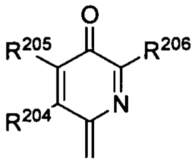
(A-20)

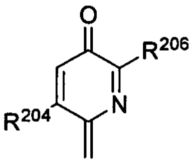
(A-21)

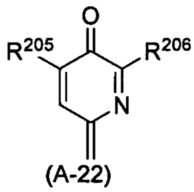
(A-22)

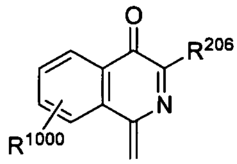
(A-23)

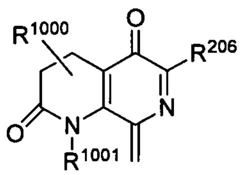
(A-24)

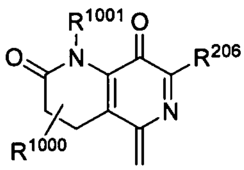
(A-25)

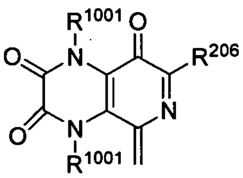
(A-26)

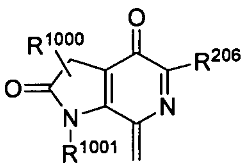
(A-27)

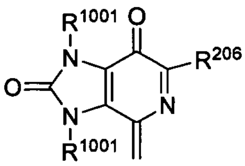
(A-28)

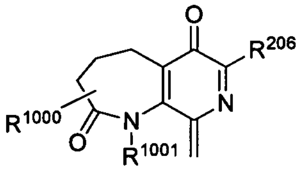
(A-29)

(A-3)

In formula (A-3), $R^{207}$ is preferably a hydrogen atom, aliphatic group, aryl group, heterocyclic group, acyl group, acylamino group, aliphatic oxy group, aliphatic sulfonamide group, arylsulfonamide group, halogen atom, carbamoylamino group, sulfamoylamino group, hydroxy group, or cyano group; more preferably a hydrogen atom, aliphatic group, acylamino group, aliphatic sulfonamide group, arylsulfonamide group, carbamoylamino group, or sulfamoylamino group; and particularly preferably a hydrogen atom, aliphatic group, acylamino group, or carbamoylamino group.

$R^{208}$ is preferably an aliphatic group, acylamino group, aliphatic sulfonamide group, arylsulfonamide group,

halogen atom, aliphatic oxycarbonyl group, carbamoylamino group, sulfamoylamino group, or cyano group, more preferably an aliphatic group, halogen atom, acylamino group, carbamoylamino group, halogen atom, or aliphatic oxycarbonyl group.

The ring formed by bonding of $R^{207}$ and $R^{208}$ is preferably a five to seven-membered ring, more preferably a five or six-membered heterocyclic ring or a six-membered aryl.

$R^{209}$ is preferably a hydrogen atom, aliphatic group, heterocyclic group, acyl group, acylamino group, aliphatic oxy group, aliphatic oxycarbonyl group, carbamoyl group, sulfamoyl group, aliphatic sulfonamide group, arylsulfonamide group, amino group, aliphatic amino group, arylamino group, carbamoylamino group, sulfamoylamino group, or cyano group; more preferably a hydrogen atom, heterocyclic group, acyl group, acylamino group, aliphatic oxycarbonyl group, carbamoyl group, aliphatic sulfonamide group, arylsulfonamide group, or carbamoylamino group; and particularly preferably a hydrogen atom, heterocyclic group, acyl group, acylamino group, aliphatic oxycarbonyl group, carbamoyl group, or carbamoylamino group.

The group denoted by formula (A-3) is preferably one of (A-30) to (A-37) below; more preferably (A-30), (A-32), or (A-35); and further preferably (A-30).

[Chem. 19]

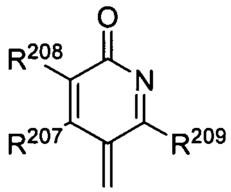

(A-30)

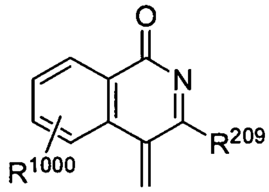

(A-31)

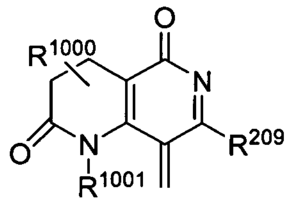

(A-32)

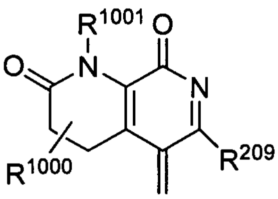

(A-33)

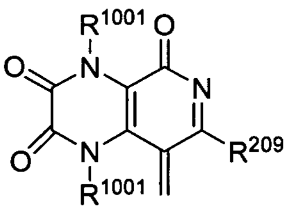

(A-34)

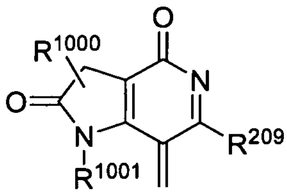

(A-35)

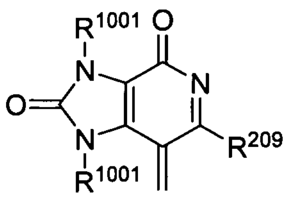

(A-36)

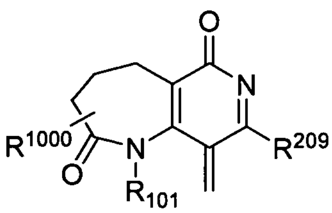

(A-37)

(A-4)

In formula (A-4), $R^{210}$ is preferably a hydrogen atom, aliphatic group, heterocyclic group, acyl group, acylamino group, aliphatic oxy group, aliphatic oxycarbonyl group, carbamoyl group, sulfamoyl group, aliphatic sulfonamide group, arylsulfonamide group, amino group, aliphatic amino group, arylamino group, carbamoylamino group, sulfamoylamino group, or cyano group; more preferably a heterocyclic group, acyl group, acylamino group, aliphatic oxycarbonyl group, carbamoyl group, sulfamoyl group, aliphatic sulfonamide group, arylsulfonamide group, carbamoylamino group, or sulfamoylamino group; and particularly preferably a heterocyclic group, acylamino group, aliphatic oxycarbonyl group, carbamoyl group, or carbamoylamino group.

$R^{211}$ is preferably a hydrogen atom, aliphatic group, aryl group, heterocyclic group, acyl group, acylamino group, aliphatic oxy group, aliphatic sulfonamide group, arylsulfonamide group, halogen atom, carbamoylamino group,

sulfamoylamino group, hydroxy group, or cyano group; more preferably an aliphatic group, acylamino group, aliphatic sulfonamide group, arylsulfonamide group, carbamoylamino group, or sulfamoylamino group; and particularly preferably an acylamino group or carbamoylamino group.

(A-5)

In formula (A-5), $R^{212}$ is preferably a hydrogen atom, aliphatic group, aryl group, heterocyclic group, acyl group, acylamino group, aliphatic oxy group, aliphatic sulfonamide group, arylsulfonamide group, halogen atom, carbamoylamino group, sulfamoylamino group, hydroxy group, or cyano group; more preferably an aliphatic group, acylamino group, aliphatic sulfonamide group, arylsulfonamide group, carbamoylamino group, or sulfamoylamino group; and particularly preferably an aliphatic group, acylamino group, or carbamoylamino group.
$R^{213}$ is preferably a hydrogen atom, aliphatic group, acylamino group, or halogen atom, more preferably a hydrogen atom.

(A-6)

In formula (A-6), $R^{214}$ is preferably an aliphatic group, aryl group, heterocyclic group, acylamino group, aliphatic oxycarbonyl group, aliphatic sulfonamide group, arylsulfonamide group, amino group, aliphatic amino group, arylamino group, or heterocyclic amino group, more preferably an aliphatic group, aryl group, heterocyclic group, acylamino group, aliphatic oxy group, aliphatic amino group, arylamino group, or heterocyclic amino group.
$R^{215}$ is preferably an aliphatic group, aryl group, heterocyclic group, acyl group, aliphatic oxycarbonyl group, carbamoyl group, sulfamoyl group, or cyano group, more preferably a heterocyclic group, acyl group, aliphatic oxycarbonyl group, carbamoyl group, or cyano group.
The group denoted by formula (A-6) is preferably (A-60) or (A$^1$61) below, more preferably (A-60).

[Chem. 20]

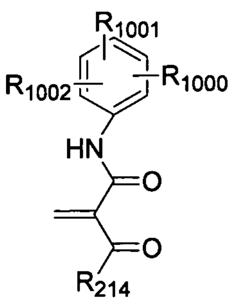
(A-60)

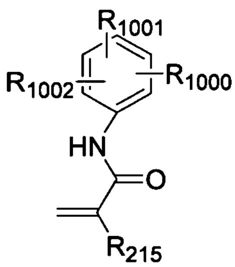
(A-61)

(A-7)

In formula (A-7), $R^{216}$ is preferably an aliphatic group, aryl group, or acyl group, more preferably an aliphatic group.
$R^{217}$ is preferably an aliphatic group, aryl group, heterocyclic group, acyl group, aliphatic oxycarbonyl group, carbamoyl group, sulfamoyl group, or cyano group, more preferably a heterocyclic group, acyl group, aliphatic oxycarbonyl group, carbamoyl group, or cyano group.
The ring formed by $Q^1$ and the two adjacent nitrogen atoms is preferably a five to seven-membered ring, more preferably a five or six-membered ring. A specific example is a 1,2,4-thiadiazine-1,1-dioxide ring.
The group denoted by formula (A-7) is preferably one of (A-70) to (A-73) below; more preferably (A-72) or (A-73); and further preferably (A-72).

[Chem. 21]

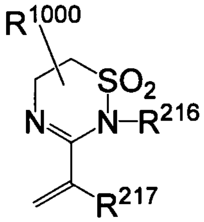

(A-70)

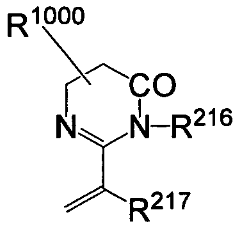

(A-71)

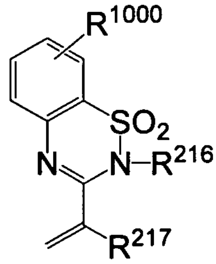

(A-72)

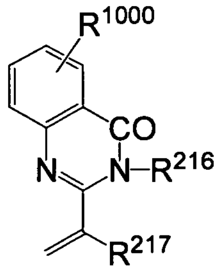

(A-73)

(A-8)

In formula (A-8), $R^{218}$ is preferably an aliphatic group, aryl group, heterocyclic group, acyl group, acylamino group, aliphatic oxy group, aliphatic oxycarbonyl group, carbamoyl group, aliphatic amino group, arylamino group, heterocyclic amino group, carbamoylamino group, sulfamoylamino group, hydroxy group, or cyano group; more preferably an aliphatic group, heterocyclic group, acyl group, acylamino group, aliphatic oxycarbonyl group, carbamoyl group, arylamino group, heterocyclic amino group, carbamoylamino group, or cyano group; and particularly preferably an acylamino group, aliphatic oxycarbonyl group, carbamoyl group, arylamino group, carbamoylamino group, or cyano group.

$R^{219}$ is preferably an aliphatic group, aryl group, heterocyclic group, acyl group, aliphatic oxycarbonyl group, or carbamoyl group; more preferably an aliphatic group, aryl group, or heterocyclic group; and particularly preferably an aryl group.

$R^{220}$ is preferably an oxygen atom or =N-R' (where R' denotes a hydrogen atom, aliphatic group, acyl group, or sulfonyl group); more preferably an oxygen atom, =NH, or =N aliphatic group; and further preferably an oxygen atom or =NH.

The group denoted by formula (A-8) is preferably the group denoted by formula (A-80) below.

[Chem. 22]

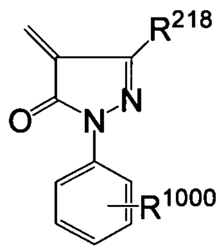

(A-80)

(A-9)

In formula (A-9), $R^{221}$ is preferably a hydrogen atom, aliphatic group, aryl group, heterocyclic group, acylamino group, aliphatic oxy group, aryloxy group, arylamino group, heterocyclic amino group, or carbamoylamino group, more preferably an aliphatic group, aliphatic oxy group, or aryloxy group.

The ring formed by $Q^2$ and the two adjacent nitrogen atoms is preferably a five to seven-membered ring, more preferably a five or six-membered ring. Specific examples are 1,2,4-triazole rings and pyrimidine rings.

The group denoted by formula (A-9) is preferably one of (A-90) to (A-95) below; more preferably (A-90), (A-91), (A-92), or (A-93); and further preferably (A-90) or (A-93).

[Chem. 23]

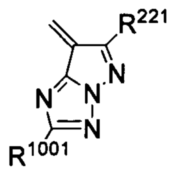
(A-90)

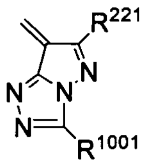
(A-91)

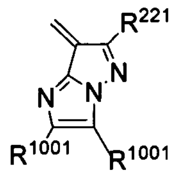
(A-92)

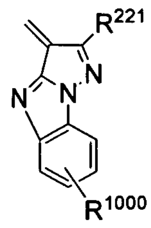
(A-93)

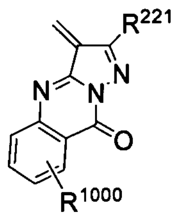
(A-94)

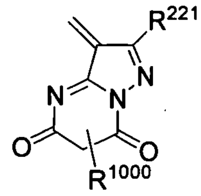
(A-95)

(A-10)

In the formula (A-10), the ring formed by $Q^3$ and the two adjacent carbon atoms is preferably a five to seven-membered ring, more preferably a five to six-membered ring, and particularly preferably, a six-membered heterocyclic ring.

The group denoted by formula (A-10) is preferably one of (A-100) to (A-108) below; more preferably (A-101), (A-103), (A-104), or (A-108); further preferably (A-101), (A-103), or (A-108); and particularly preferably, (A-103) or (A-108).

[Chem. 24]

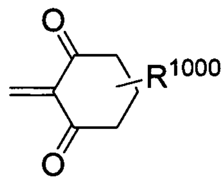
(A-100)

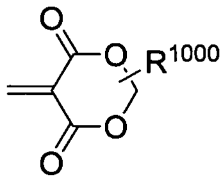
(A-101)

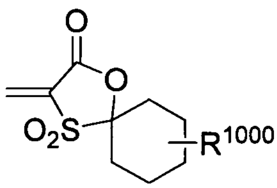
(A-102)

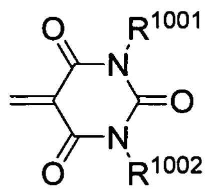
(A-103)

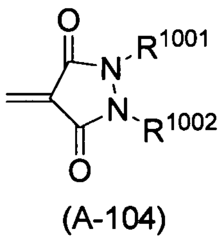
(A-104)

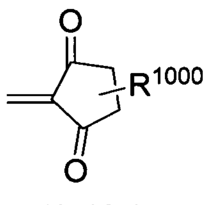
(A-105)

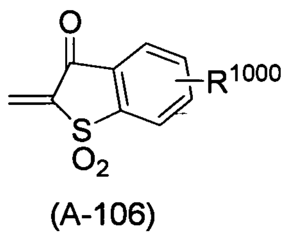
(A-106)

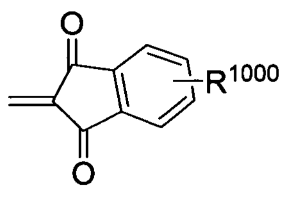
(A-107)

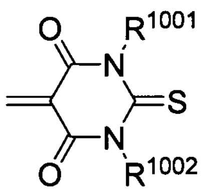
(A-108)

(A-11)

In formula (A-11), $R^{222}$ and $R^{223}$ are preferably heterocyclic groups, acyl groups, aliphatic oxycarbonyl groups, carbamoyl groups, aliphatic sulfonyl groups, arylsulfonyl groups, sulfamoyl groups, or cyano groups; more preferably acyl groups, aliphatic oxycarbonyl groups, carbamoyl groups, aliphatic sulfonyl groups, or cyano groups; and particularly preferably aliphatic oxycarbonyl groups, aliphatic sulfonyl groups, or cyano groups. In formula (A-11), $R^{222}$ and $R^{223}$ may be identical or different from each other.

The group denoted by formula (A-11) is preferably (A-110) or (A-111) below, more preferably (A-110).

[Chem. 25]

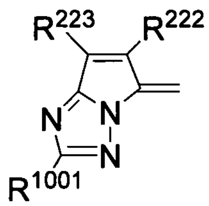

(A-110)

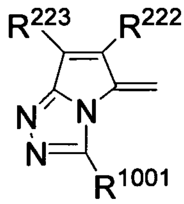

(A-111)

In above-described (A-1) to (A-11), the A moiety is preferably (A-1), (A-2), (A-6), (A-7), (A-8), (A-9), or (A-11); more preferably (A-1), (A-6), (A-7), (A-8), (A-9), or (A-11); and particularly preferably (A-1), (A-7), (A-9), or (A-11).

In general formula (I), the heterocyclic group denoted by B may be unsubstituted or substituted, may be condensed, and is preferably a five to seven-membered substituted or unsubstituted heterocyclic group having a total of 2 to 30 carbon atoms. Specific examples, each of which may be substituted, are: pyrazole-5-one, pyrazolidine-3,5-dione, imidazoline-5-one, hydantoin, 2 or 4-thiohydantoin, 2-iminooxazolidine-4-one, 2-oxazoline-5-one, 2-thiooxazoline-2,4-dione, isorhodanine, rhodanine, thiophene-3-one, thiophene-3-one-1,1-dioxide, indoline-2-one, indoline-3-one, 2-oxoindazolium, 5,7-dioxo-6,7-dihydrothiazolo[3,2-a]pyrimidine, 3,4-dihydroisoquinoline-4-one, 1,3-dioxane-4,6-dione (such as Meldrum's acid), barbituric acid, 2-thiobarbituric acid, coumarin-2,4-dione, indazoline-2-one, pyrido[1,2-a]pyrimidine-1,3-dione, pyrazolo[1,5-b]quinazolone, pyrazolopyridone, five or six-membered carbon rings (such as hexane-1,3-dione, pentane-1,3-dione, and indane-1,3-dione), 1H-imidazo[1,2-b]pyrazoles, 1H-pyrazolo[5,1-C][1,2,4]triazoles, and 1H-pyrazolo[1,5-b][1,2,4]triazoles. Of these, B preferably denotes an aromatic heterocyclic ring.

The aryl group denoted by B may be unsubstituted or substituted, may be condensed, and preferably has a total of 6 to 18 carbon atoms. Examples are 4-diethylamino-2-methylphenyl group, 4-N-ethyl-N-methanesulfonamidoethyl-2-methylphenyl group, and 4-dihydroxyethyl-2-methylphenyl group.

The substituent when B is a substituted heterocyclic group or a substituted aryl group is identical to those described above for the substituent that may be comprised in A.

The groups denoted by formulas (B-1) to (B-9) below are examples of preferable groups as the B moiety. In the following formulas, $R^{1007}$ is a substituent, and $R^{1006}$ and $R^{1005}$ are each independently a hydrogen atom or a substituent. The above substituent may be any of the various above-described substituents, for example.

[Chem. 26]

(B-1)

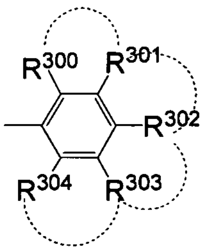

(B-2)

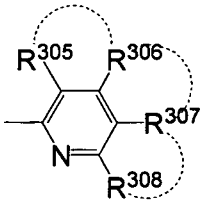

(B-3)

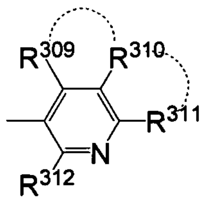

(B-4)

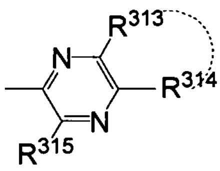

(B-5)

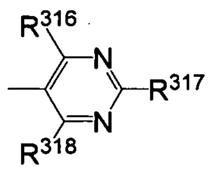

(B-6)

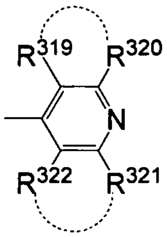

(B-7)

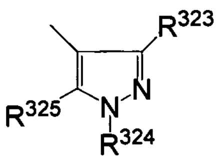

(B-8)

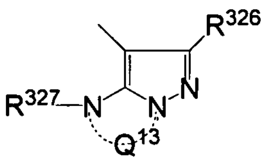

(B-9)

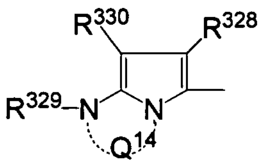

In the above formulas, $R^{300}$ to $R^{330}$ are each independently a hydrogen atom or a substituent. The above substituent may be any of the various above-described substituents, for example.
$R^{300}$ and $R^{301}$, $R^{301}$ and $R^{302}$, $R^{302}$ and $R^{303}$, $R^{303}$ and $R^{304}$, $R^{305}$ and $R^{306}$, $R^{306}$, and $R^{307}$, $R^{307}$ and $R^{308}$, $R^{309}$ and $R^{310}$, $R^{310}$ and $R^{311}$, $R^{313}$ and $R^{314}$, $R^{319}$ and $R^{320}$, and $R^{321}$ and $R^{322}$ may be bonded together to form a ring. The ring that is formed is preferably a five to seven-membered ring.

$R^{300}$ to $R^{330}$ are preferably hydrogen atoms, aliphatic groups, aryl groups, acyloxy groups, acylamino groups, aliphatic oxy groups, aliphatic sulfonyloxy groups, arylsulfonyloxy groups, aliphatic sulfonamide groups, arylsulfonamide groups, amino groups, aliphatic amino groups, arylamino groups, aliphatic oxycarbonylamino groups, aryloxycarbonylamino groups, heterocyclic oxycarbonylamino groups, hydroxy groups, cyano groups, sulfo groups, carbamoylamino groups, or sulfamoylamino groups.

The above $Q^{13}$ denotes a group of nonmetal atoms required for the formation of a ring with the two nitrogen atoms adjacent to $Q^{13}$. The above $Q^{14}$ denotes a group of nonmetal atoms required for the formation of a ring with the two nitrogen atoms adjacent to $Q^{14}$. The rings that are formed are preferably five to seven-membered rings.
The groups denoted by formulas (B-1) to (B-9) will be described in detail below.

(B-1)

In formula (B-1), $R^{300}$, $R^{301}$, $R^{303}$, and $R^{304}$ are preferably hydrogen atoms, aliphatic groups, acylamino groups, aliphatic oxy groups, aliphatic sulfonamide groups, arylsulfonamide groups, aliphatic amino groups, arylamino groups, aliphatic oxycarbonylamino groups, aryloxycarbonylamino groups, heterocyclic oxycarbonylamino groups, carbamoylamino groups, or sulfamoylamino groups, more preferably hydrogen atoms, aliphatic groups, acylamino groups, aliphatic oxy groups, aliphatic sulfonamide groups, arylsulfonamide groups, aliphatic oxycarbonylamino groups, aryloxycarbonylamino groups, heterocyclic oxycarbonylamino groups, carbamoylamino groups, or sulfamoylamino groups.

$R^{302}$ is preferably an acylamino group, aliphatic oxy group, aliphatic sulfonamide group, arylsulfonamide group, aliphatic amino group, arylamino group, aliphatic oxycarbonylamino group, aliphatic oxy group, or aliphatic sulfonamide group, more preferably an aliphatic amino group or arylamino group. $R^{302}$ and $R^{303}$ also preferably form a closed ring.

The group denoted by formula (B-1) is preferably one of (B-10) to (B-12) below, more preferably (B-10) or (B-11).

[Chem. 27]

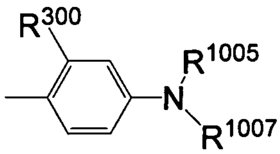

(B-10)

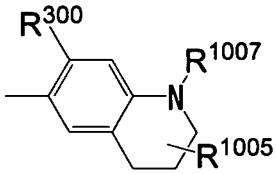

(B-11)

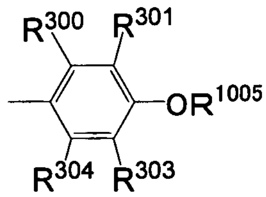

(B-12)

(B-2)

In formula (B-2), $R^{305}$, $R^{306}$, and $R^{308}$ are preferably hydrogen atoms, aliphatic groups, acylamino groups, aliphatic oxy groups, aliphatic sulfonamide groups, arylsulfonamide groups, aliphatic amino groups, arylamino groups, aliphatic oxycarbonylamino groups, aryloxycarbonylamino groups, heterocyclic oxycarbonylamino groups, carbamoylamino groups, or sulfamoylamino groups, and more preferably hydrogen atoms, aliphatic groups, acylamino groups, aliphatic oxy groups, aliphatic sulfonamide groups, arylsulfonamide groups, aliphatic oxycarbonylamino groups, aryloxycarbonylamino groups, heterocyclic oxycarbonylamino groups, carbamoylamino groups, or sulfamoylamino groups.

$R^{307}$ is preferably an acylamino group, aliphatic oxy group, aliphatic sulfonamide group, arylsulfonamide group, aliphatic amino group, arylamino group, or aliphatic oxycarbonylamino group, and more preferably an aliphatic amino group or arylamino group. $R^{306}$ and $R^{307}$, or $R^{307}$ and $R^{308}$, also preferably form a closed ring.

The group denoted by formula (B-2) is preferably denotes one of (B-20) to (B-22) below, more preferably (B-20).

[Chem. 28]

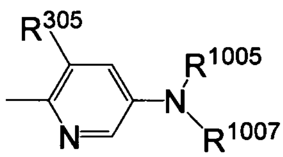

(B-20)

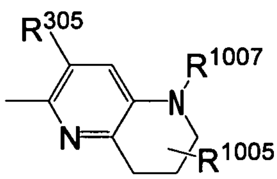

(B-21)

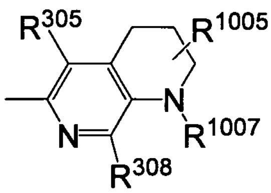

(B-22)

(B-3)

In formula (B-3), $R^{309}$, $R^{310}$, and $R^{312}$ are preferably hydrogen atoms, aliphatic groups, acylamino groups, aliphatic oxy groups, aliphatic sulfonamide groups, arylsulfonamide groups, aliphatic amino groups, arylamino groups, aliphatic oxycarbonylamino groups, aryloxycarbonylamino groups, heterocyclic oxycarbonylamino groups, carbamoylamino groups, or sulfamoylamino groups; and more preferably hydrogen atoms, aliphatic groups, acylamino groups, aliphatic oxy groups, aliphatic sulfonamide groups, arylsulfonamide groups, aliphatic oxycarbonylamino groups, aryloxycarbonylamino groups, heterocyclic oxycarbonylamino groups, carbamoylamino groups, or sulfamoylamino groups.

$R^{311}$ is preferably an acylamino group, aliphatic oxy group, aliphatic sulfonamide group, arylsulfonamide group, aliphatic amino group, arylamino group, or aliphatic oxycarbonylamino group, more preferably an aliphatic amino group or arylamino group. $R^{310}$ and $R^{311}$ also preferably form a closed ring.

The group denoted by formula (B-3) is preferably one of (B-30) to (B-32) below, more preferably (B-30) or (B-31).

[Chem. 29]

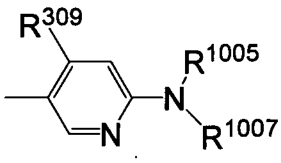

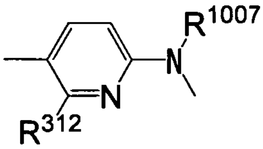

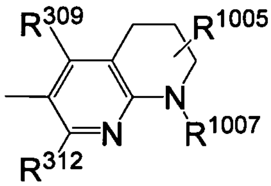

(B-30) (B-31) (B-32)

(B-4)

In formula (B-4), $R^{313}$ and $R^{315}$ are preferably hydrogen atoms, aliphatic groups, acylamino groups, aliphatic oxy groups, aliphatic sulfonamide groups, arylsulfonamide groups, aliphatic amino groups, arylamino groups, aliphatic oxycarbonylamino groups, aryloxycarbonylamino groups, heterocyclic oxycarbonylamino groups, carbamoylamino groups, or sulfamoylamino groups, more preferably hydrogen atoms, aliphatic groups, acylamino groups, aliphatic oxy groups, aliphatic sulfonamide groups, arylsulfonamide groups, aliphatic oxycarbonylamino groups, aryloxycarbonylamino groups, heterocyclic oxycarbonylamino groups, carbamoylamino groups, or sulfamoylamino groups.

$R^{314}$ is preferably an acylamino group, aliphatic oxy group, aliphatic sulfonamide group, arylsulfonamide group, aliphatic amino group, arylamino group, or aliphatic oxycarbonylamino group, more preferably an aliphatic amino group or arylamino group. $R^{313}$ and $R^{314}$ also preferably form a closed ring.

The group denoted by formula (B-4) is preferably (B-40) or (B-41) below, more preferably (B-40).

[Chem. 30]

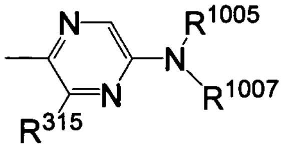

(B-40)

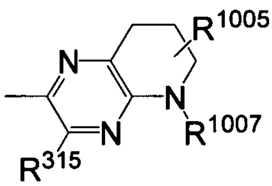

(B-41)

(B-5)

In formula (B-5), $R^{316}$ and $R^{318}$ are preferably hydrogen atoms, aliphatic groups, acylamino groups, aliphatic oxy groups, aliphatic sulfonamide groups, arylsulfonamide groups, aliphatic amino groups, arylamino groups, aliphatic oxycarbonylamino groups, aryloxycarbonylamino groups, heterocyclic oxycarbonylamino groups, carbamoylamino groups, or sulfamoylamino groups; and more preferably hydrogen atoms, aliphatic groups, acylamino groups, aliphatic oxy groups, aliphatic sulfonamide groups, arylsulfonamide groups, aliphatic oxycarbonylamino groups, aryloxycarbonylamino groups, heterocyclic oxycarbonylamino groups, carbamoylamino groups, or sulfamoylamino groups.

$R^{317}$ is preferably an acylamino group, aliphatic oxy group, aliphatic sulfonamide group, arylsulfonamide group, aliphatic amino group, arylamino group, or aliphatic oxycarbonylamino group, more preferably an aliphatic amino group or arylamino group.

The group denoted by formula (B-5) is preferably (B-50) below.

[Chem. 31]

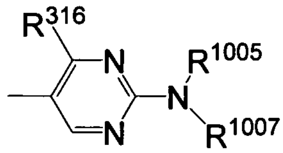

(B-50)

(B-6)

In formula (B-6), $R^{319}$, $R^{320}$, and $R^{321}$ are preferably hydrogen atoms, aliphatic groups, acylamino groups, aliphatic oxy groups, aliphatic sulfonamide groups, arylsulfonamide groups, aliphatic amino groups, arylamino groups, aliphatic oxycarbonylamino groups, aryloxycarbonylamino groups, heterocyclic oxycarbonylamino groups, carbamoylamino groups, or sulfamoylamino groups; and more preferably hydrogen atoms, aliphatic groups, acylamino groups, aliphatic oxy groups, aliphatic sulfonamide groups, arylsulfonamide groups, aliphatic oxycarbonylamino groups, aryloxycarbonylamino groups, heterocyclic oxycarbonylamino groups, carbamoylamino groups, or sulfamoylamino groups.

$R^{322}$ is preferably a hydrogen atom, acylamino group, aliphatic oxy group, aliphatic sulfonamide group, or arylsulfonamide group, more preferably a hydrogen atom.

(B-7)

In formula (B-7), $R^{323}$ is preferably an aliphatic group, aryl group, heterocyclic group, acyl group, acylamino group, aliphatic oxy group, aliphatic oxycarbonyl group, carbamoyl group, aliphatic amino group, arylamino group, heterocyclic amino group, carbamoylamino group, sulfamoylamino group, hydroxy group, or cyano group; more preferably an aliphatic group, heterocyclic group, acyl group, acylamino group, aliphatic oxycarbonyl group, carbamoyl group, arylamino group, heterocyclic amino group, carbamoylamino group, or cyano group; and particularly preferably denotes an acylamino group, aliphatic oxycarbonyl group, carbamoyl group, arylamino group, carbamoylamino group, or cyano group.

$R^{324}$ is preferably an aliphatic group, aryl group, heterocyclic group, acyl group, aliphatic oxycarbonyl group, or carbamoyl group; more preferably an aliphatic group, aryl group, or heterocyclic group; and particularly preferably an aryl group.

$R^{325}$ is preferably a hydroxy group, aliphatic oxy group, acyloxy group, acylamino group, aliphatic oxycarbonylamino group, more preferably a hydroxy group or aliphatic oxy group.

The group denoted by formula (B-7) is preferably (B-70) below. In (B-70), it is preferable for $R^{1006}$ to be a hydrogen atom or an aliphatic group.

[Chem. 32]

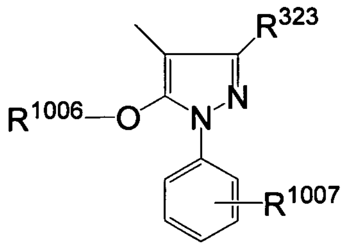

(B-70)

(B-8)

In formula (B-8), $R^{326}$ is preferably a hydrogen atom, aliphatic group, aryl group, heterocyclic group, acylamino group, aliphatic oxy group, aryloxy group, arylamino group, heterocyclic amino group, or carbamoyl amino group; more

preferably an aliphatic group, aliphatic oxy group, or aryloxy group; and particularly preferably an aliphatic group.

$R^{327}$ is preferably a hydrogen atom, aliphatic group, acyl group, aliphatic oxycarbonyl group, carbamoyl group, aliphatic sulfonyl group, or aromatic sulfonyl group; more preferably a hydrogen atom, aliphatic group, acyl group, or aliphatic sulfonyl group; and particularly preferably a hydrogen atom or aliphatic group. The ring formed by $Q^{13}$ with the two adjacent nitrogen atoms is preferably a five or six-membered ring.

The group denoted by formula (B-8) is preferably one of (B-80) to (B-85) below; more preferably (B-80), (B-81), (B-82), or (B-83); and further preferably (B-80) or (B-83).

[Chem. 33]

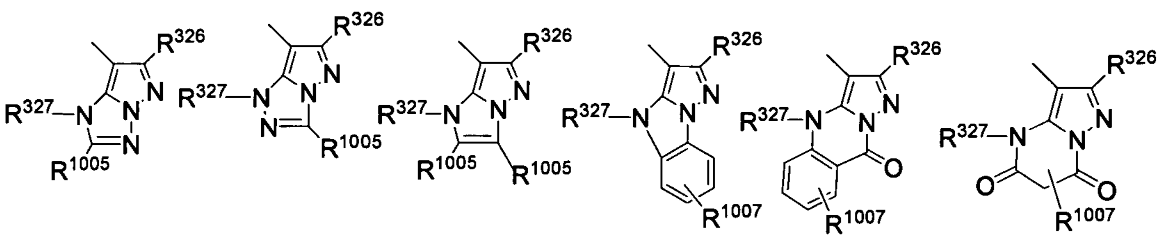

(B-80) (B-81) (B-82) (B-83) (B-84) (B-85)

(B-9)

In formula (B-9), $R^{328}$ and $R^{330}$ are preferably heterocyclic groups, acyl groups, aliphatic oxycarbonyl groups, carbamoyl groups, aliphatic sulfonyl groups, arylsulfonyl groups, sulfamoyl groups, or cyano groups; more preferably acyl groups, aliphatic oxycarbonyl groups, carbamoyl groups, aliphatic sulfonyl groups, or cyano groups; and particularly preferably aliphatic oxycarbonyl groups, aliphatic sulfonyl groups, or cyano groups.

$R^{329}$ is preferably a hydrogen atom, aliphatic group, acyl group, aliphatic oxycarbonyl group, carbamoyl group, aliphatic sulfonyl group, or aromatic sulfonyl group; more preferably a hydrogen atom, aliphatic group, acyl group, or aliphatic sulfonyl group; and particularly preferably a hydrogen atom or aliphatic group. The ring formed by $Q^{14}$ with the two adjacent nitrogen atoms is preferably a five or six-membered ring.

The group denoted by formula (B-9) is preferably (B-90) or (B-91) below, more preferably (B-90).

[Chem. 34]

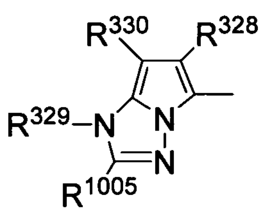

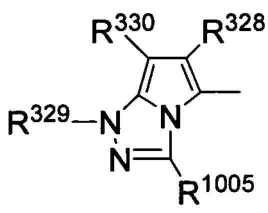

(B-90) (B-91)

In (B-1) to (B-9) mentioned above, the B moiety is preferably (B-1), (B-3), (B-4), (B-7), or (B-8), more preferably (B-1), (B-3), or (B-8).

Preferable combinations of the A and B moieties in the dye denoted by general formula (I) are given below. The compounds denoted by general formulas (100) to (106) further below are also examples of preferable combinations of the A and B moieties.

[Table 1]

| A=N-B | |
|---|---|
| A moiety | B moiety |
| A-1 | B-1 |
| A-1 | B-3 |
| A-1 | B-7 |
| A-1 | B-8 |
| A-2 | B-1 |
| A-6 | B-1 |
| A-6 | B-3 |
| A-7 | B-1 |
| A-7 | B-3 |
| A-8 | B-1 |
| A-8 | B-3 |
| A-8 | B-7 |
| A-8 | B-8 |
| A-9 | B-1 |
| A-9 | B-3 |
| A-9 | B-7 |
| A-9 | B-8 |
| A-11 | B-1 |
| A-11 | B-8 |

Specific examples of moieties A and B in general formula (I) are given below. However, the dye employed in the present invention is not limited to the examples below. In the following formulas, "*" denotes a part bonding with a nitrogen atom in general formula (I).

[Chem. 35]

A1-01
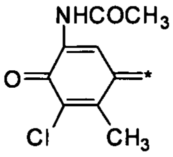

A1-02
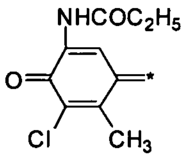

A1-03
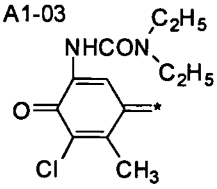

A1-04
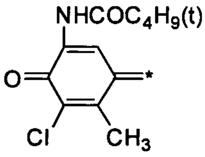

A1-05
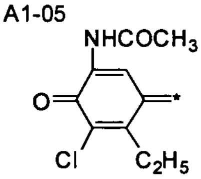

A1-06
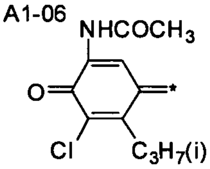

A1-07
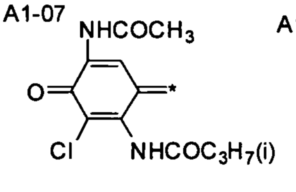

A1-08
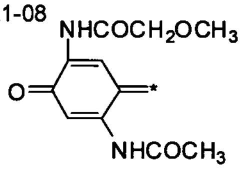

A1-09
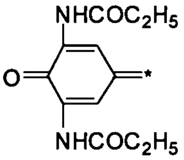

A1-10
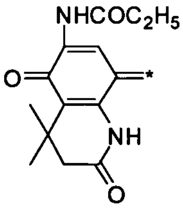

A1-11
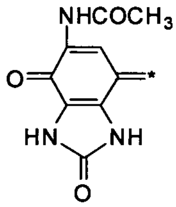

A1-12
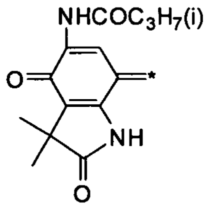

A1-13
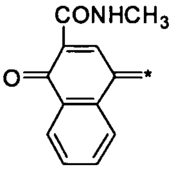

A1-14
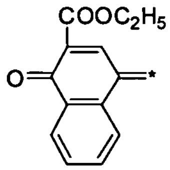

A1-15
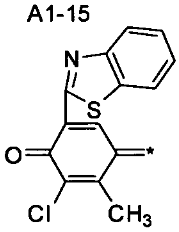

A1-16
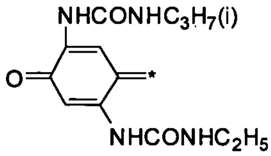

A1-17
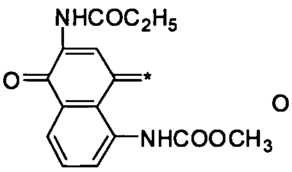

A1-18
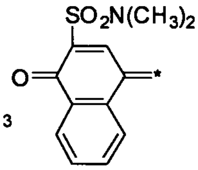

A1-19
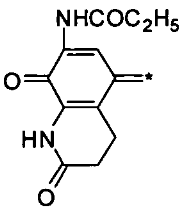

A1-20
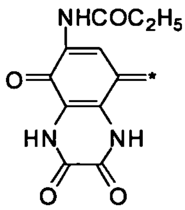

[Chem. 36]

A2-01

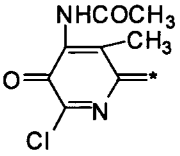

A2-02

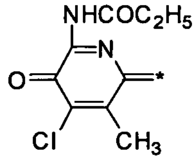

A2-03

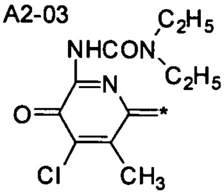

A2-04

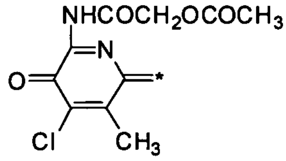

A2-05

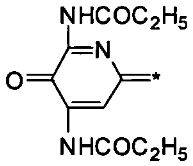

A2-06

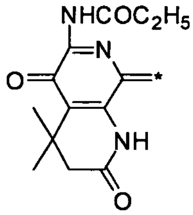

A2-07

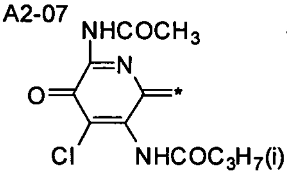

A2-08

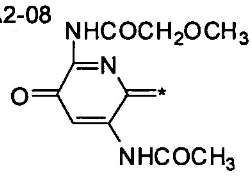

A2-09

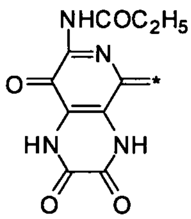

A2-10

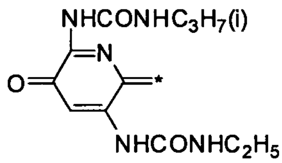

A2-11

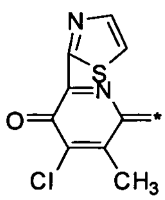

A2-12

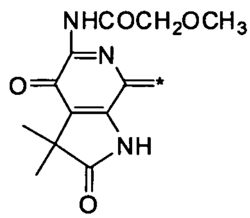

[Chem. 37]

A3-01

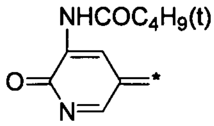

A3-02

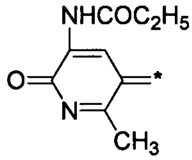

A3-03

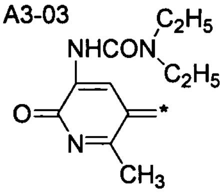

A3-04

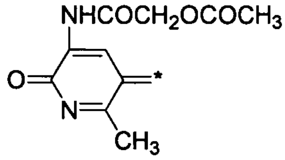

A3-05

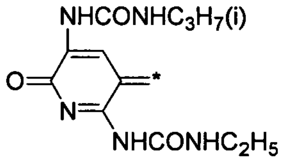

A3-06

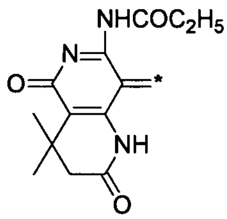

A3-07

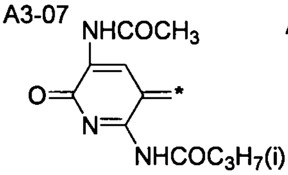

A3-08

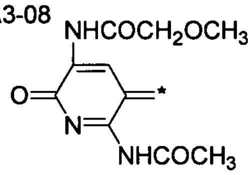

A3-09

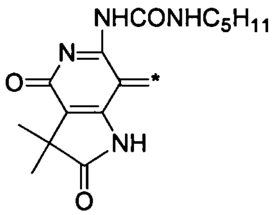

[Chem. 38]

A4-01

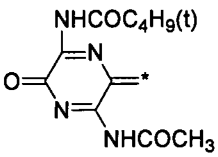

A4-02

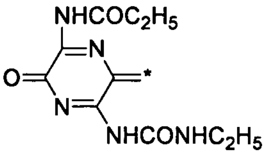

A4-03

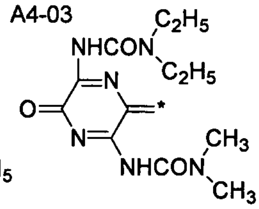

A4-04

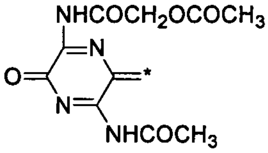

A4-05

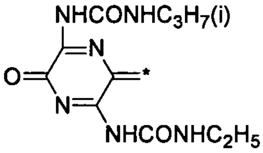

A4-06

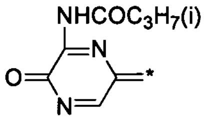

A4-07

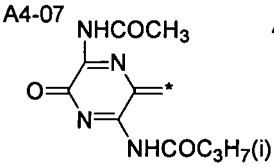

A4-08

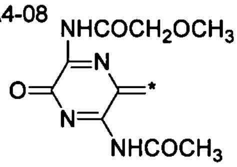

A5-01

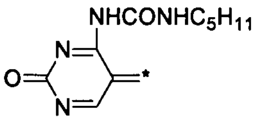

A5-02

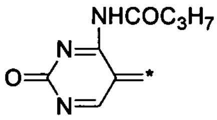

A5-03

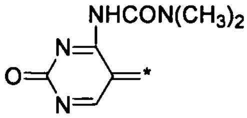

A5-04

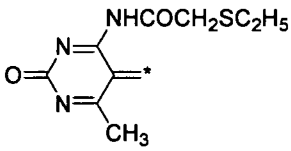

[Chem. 39]

A6-01

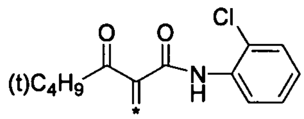

A6-02

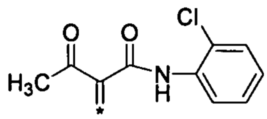

A6-03

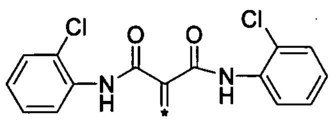

A6-04

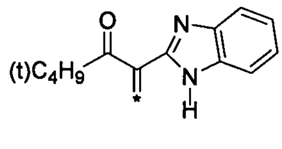

A6-05

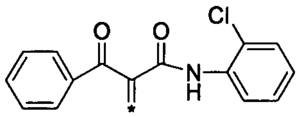

A6-06

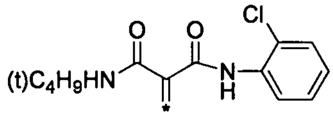

A6-07

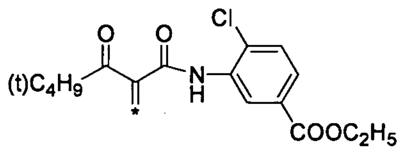

A6-08

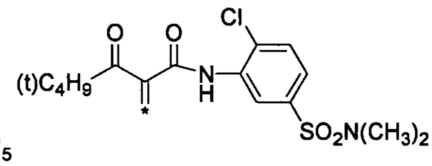

A6-09

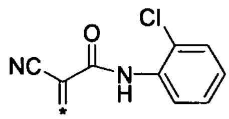

A6-10

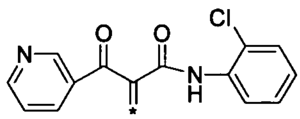

A6-11

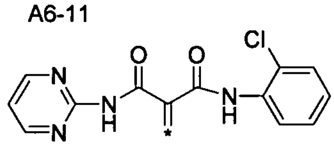

A6-12

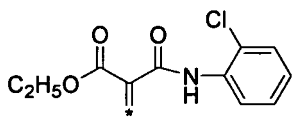

A6-13

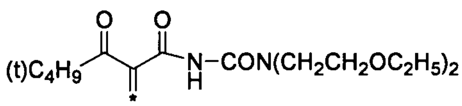

[Chem. 40]

A7-01

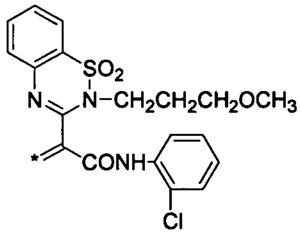

A7-02

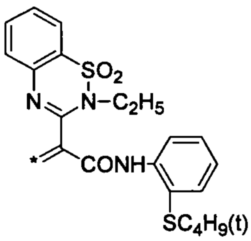

A7-03

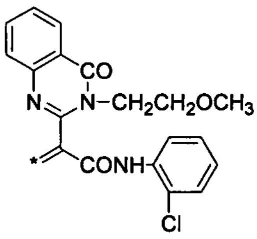

A7-04

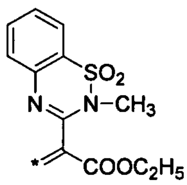

A7-05

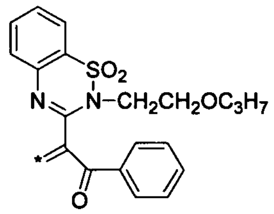

A7-06

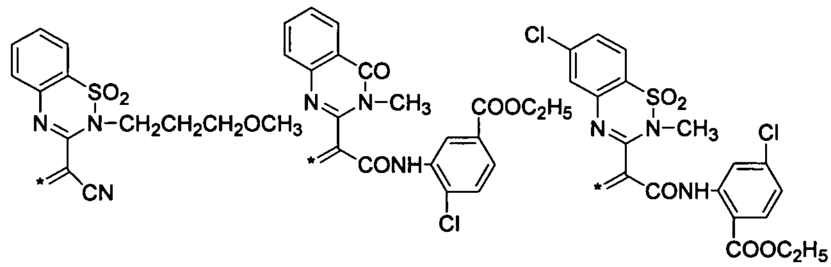

A7-07

A7-08

A7-09

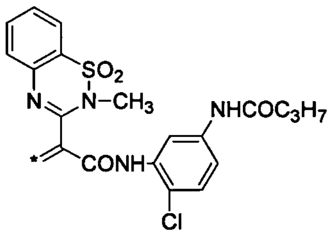

A7-10

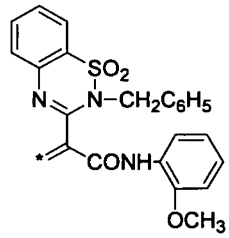

A7-11

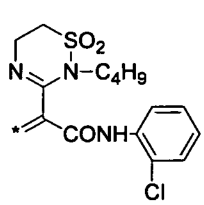

A7-12

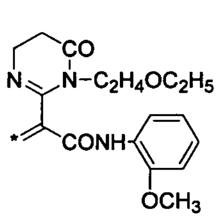

A7-13

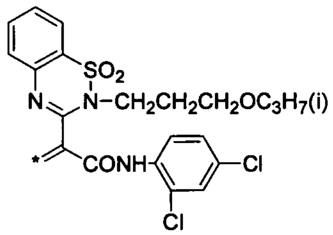

[Chem. 41]

A8-01

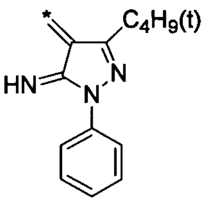

A8-02

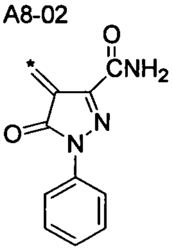

A8-03

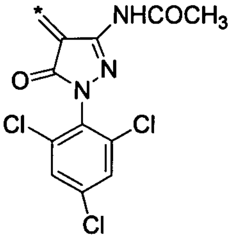

A8-04

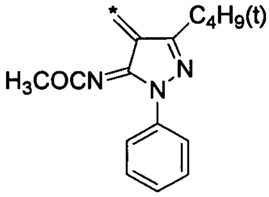

A8-05

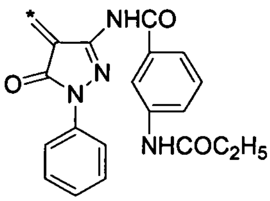

A8-06

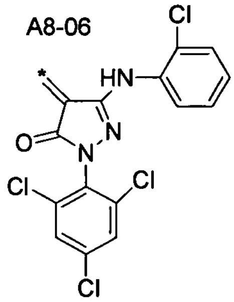

A8-07

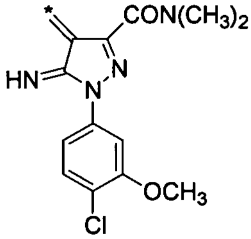

A8-08

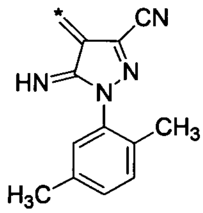

A8-09

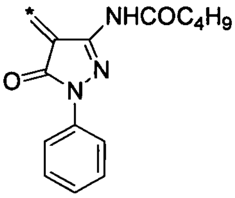

A8-10

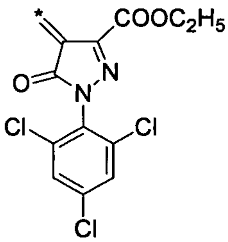

A8-11

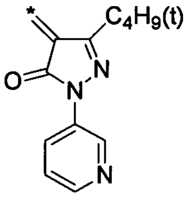

A8-12

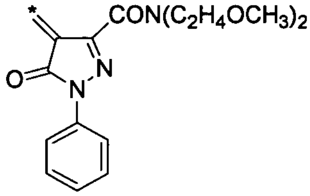

A8-13

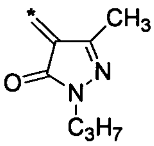

A8-14

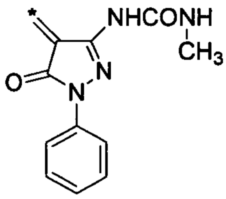

A8-15

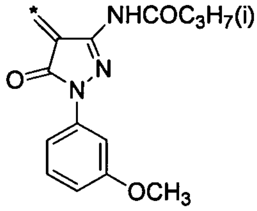

A8-16

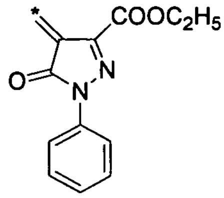

A8-17

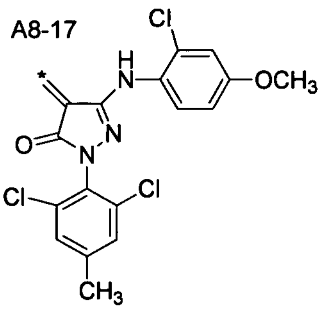

[Chem. 42]

A9-01

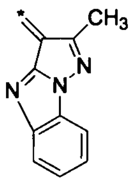

A9-02

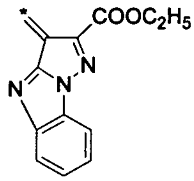

A9-03

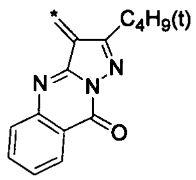

A9-04

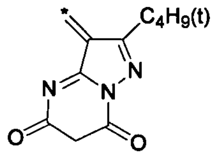

A9-05

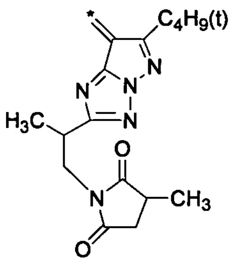

A9-06

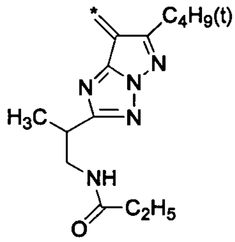

A9-07

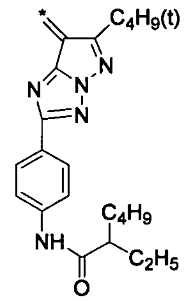

A9-08

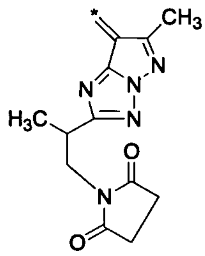

A9-09

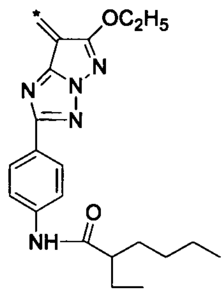

A9-10

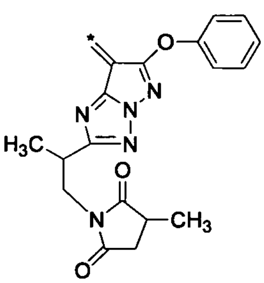

A9-11

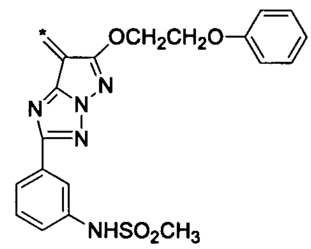

A9-12

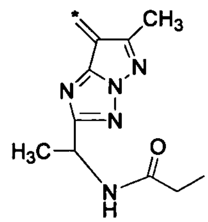

A9-13

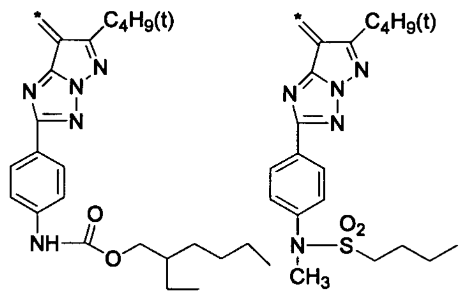

A9-14

A9-15

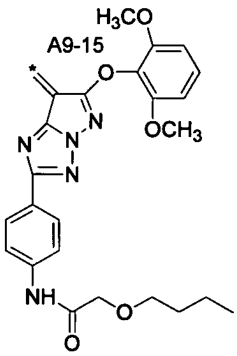

A9-16

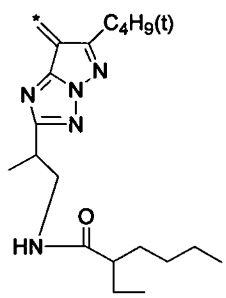

A9-17

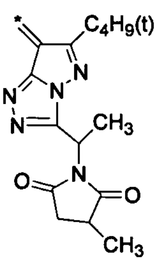

A9-18

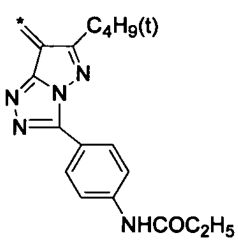

A9-19

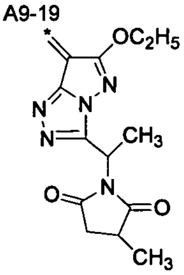

A9-20

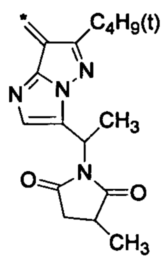

[Chem. 43]

A10-01

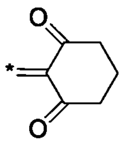

A10-02

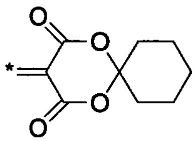

A10-03

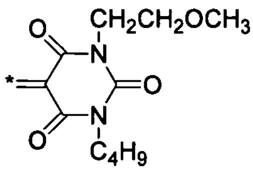

A10-04

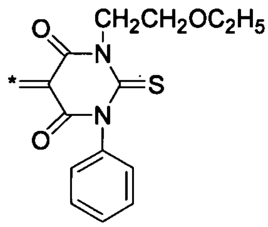

A10-05

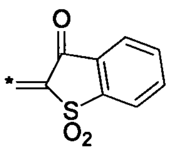

A10-06

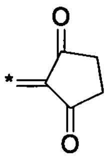

A10-07

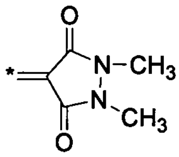

A10-08

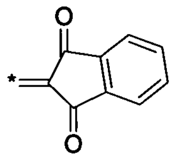

A10-09

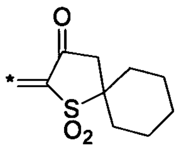

A10-10

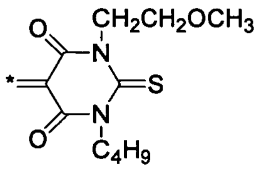

A10-11

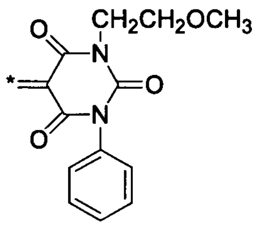

[Chem. 44]

A11-01

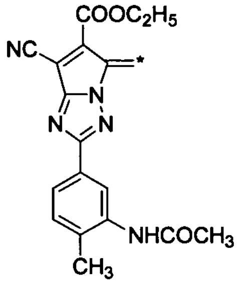

A11-02

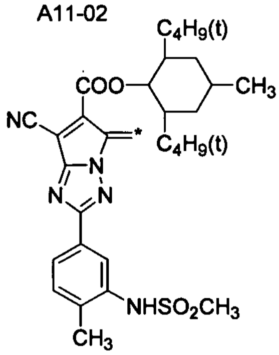

A11-03

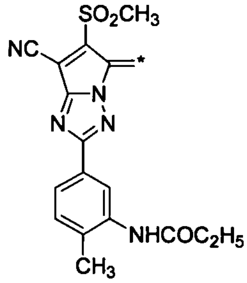

A11-04

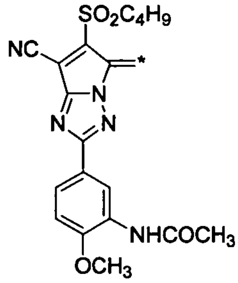

A11-05

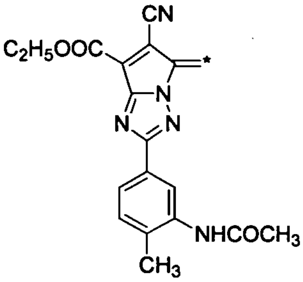

A11-06

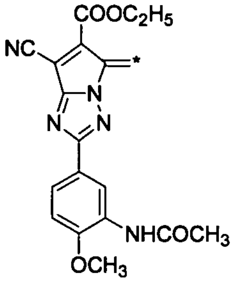

A11-07

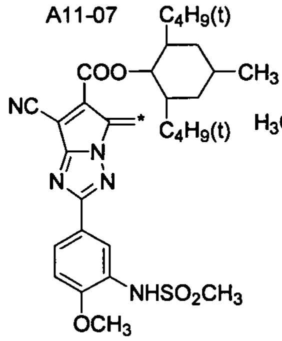

A11-08

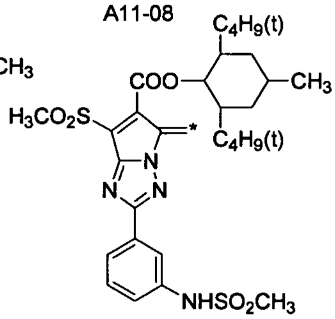

A11-09

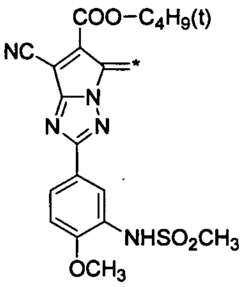

A11-10

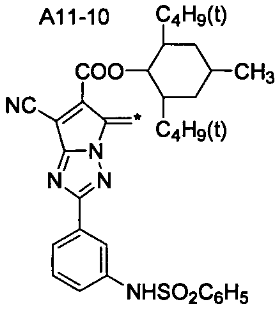

A11-11

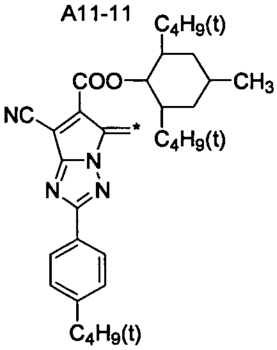

A11-12

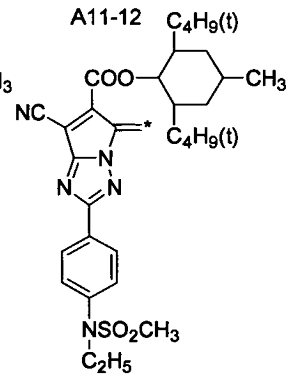

A11-13

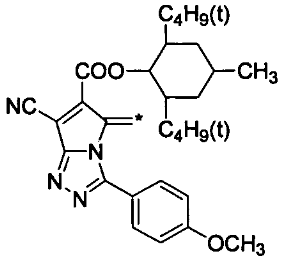

A11-14

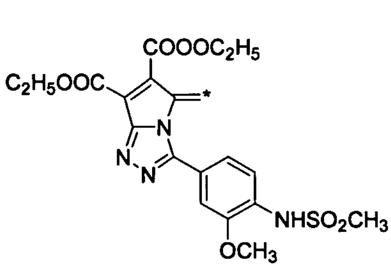

A11-15

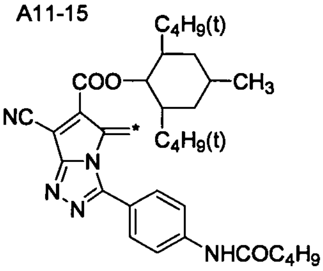

[Chem. 45]

B1-01

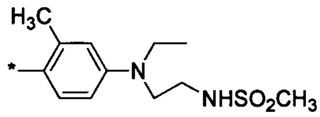

B1-02

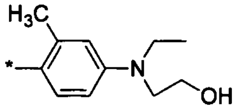

B1-03

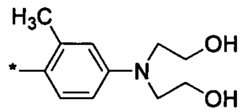

B1-04

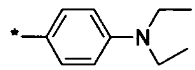

B1-05

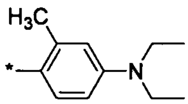

B1-06

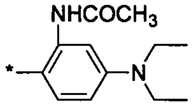

B1-07

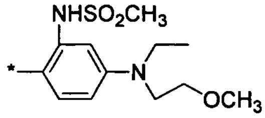

B1-08

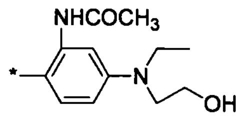

B1-09

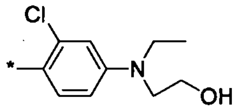

B1-10

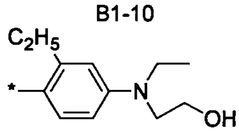

B1-11

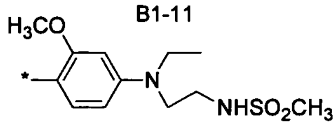

B1-12

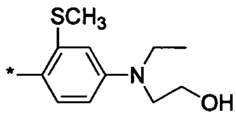

B1-13

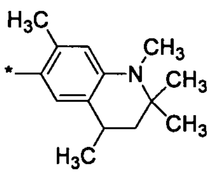

B1-14

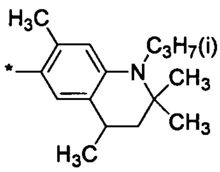

B1-15

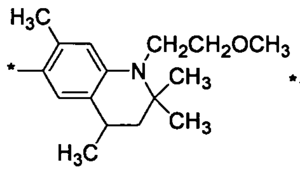

B1-16

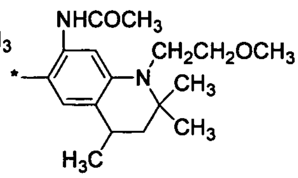

B1-17

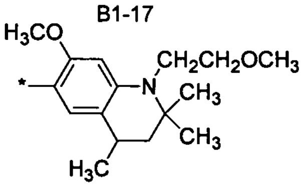

B1-18

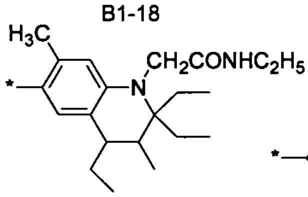

B1-19

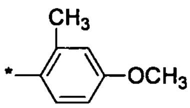

B1-20

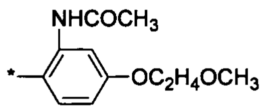

B1-21

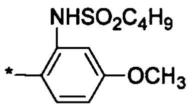

[Chem. 46]

B2-01

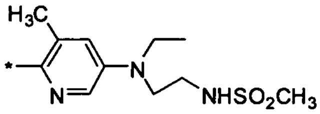

B2-02

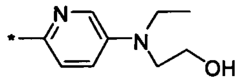

B2-03

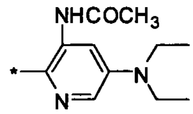

B2-04

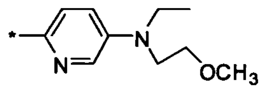

B3-01

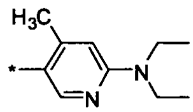

B3-02

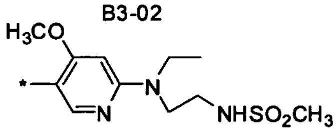

B3-03

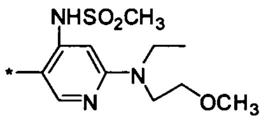

B3-04

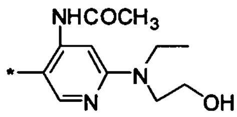

B3-05

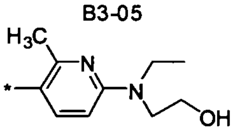

B3-06

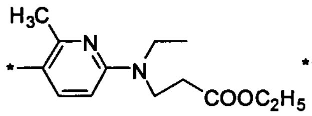

B3-07

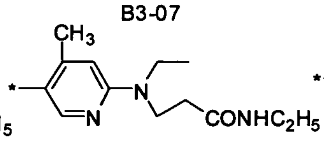

B3-08

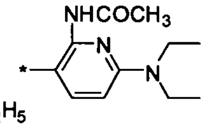

B4-01

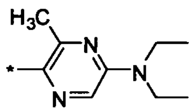

B4-02

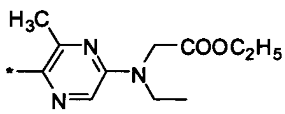

B4-03

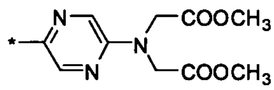

B5-01

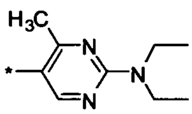

B5-02

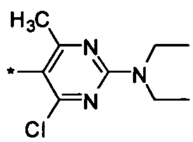

B5-03

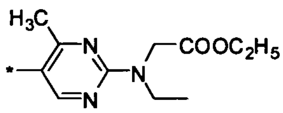

B6-01

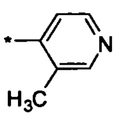

B6-02

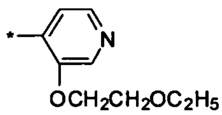

B6-03

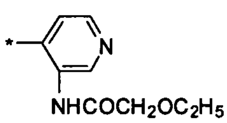

[Chem. 47]

B7-01
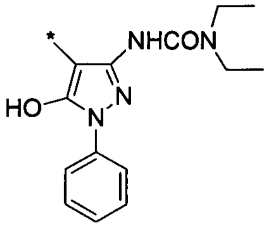
B7-02
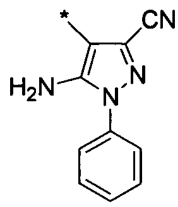
B7-03
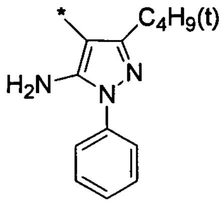
B7-04
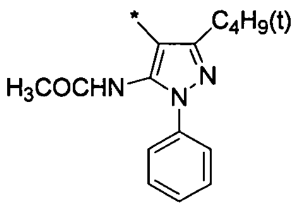

B7-05
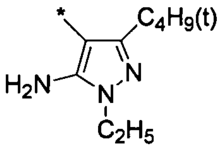
B7-06
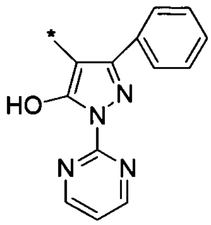
B7-07
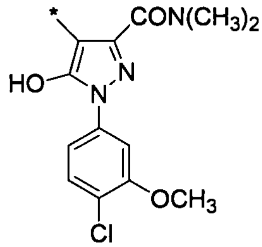
B7-08
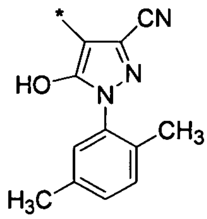

B7-09
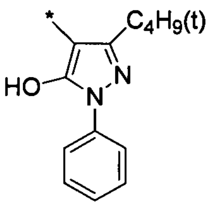
B7-10
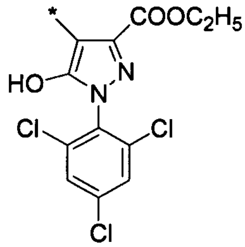
B7-11
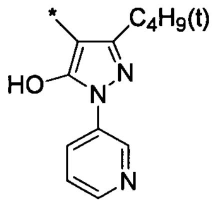
B7-12
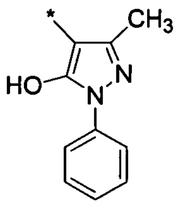

B7-13
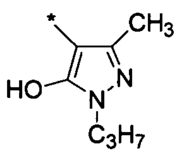
B7-14
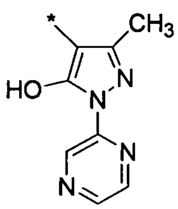
B7-15
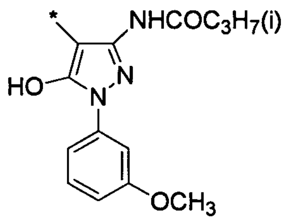
B7-16
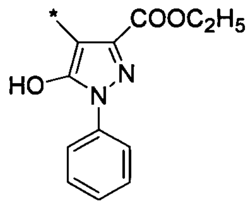

B7-17
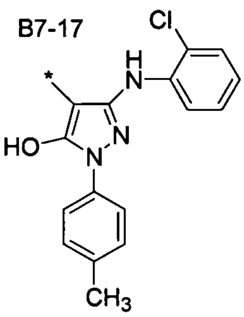
B7-18
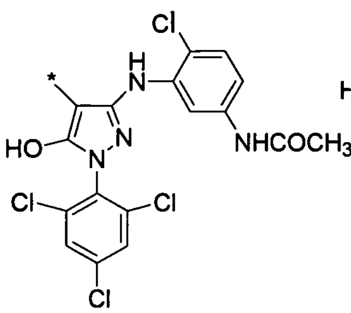
B7-19
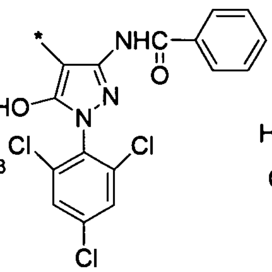
B7-20
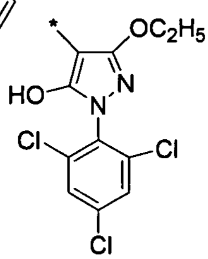

[Chem. 48]

B8-01
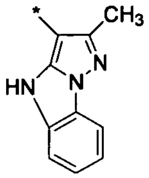

B8-02
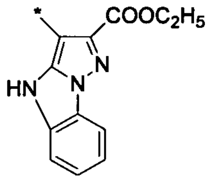

B8-03
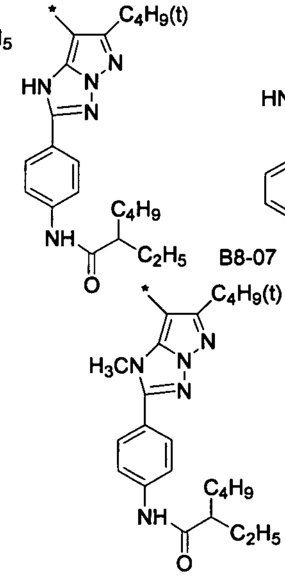

B8-07

B8-04
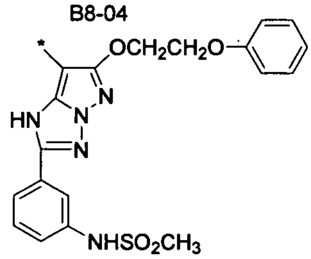

B8-05
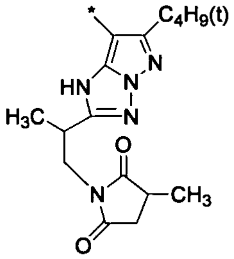

B8-06
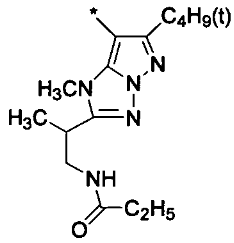

B8-08
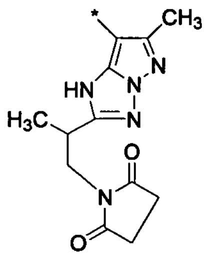

B8-09
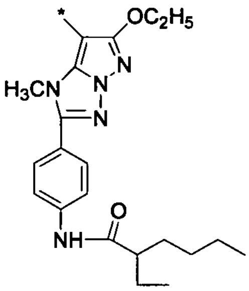

B8-10
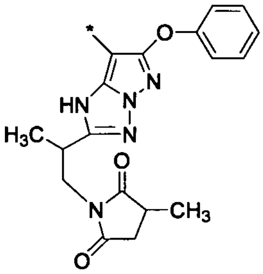

B8-11
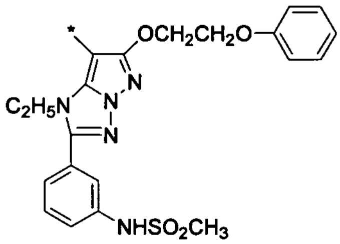

B8-12
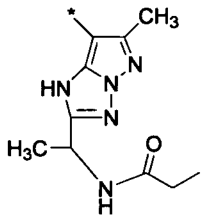

B8-13
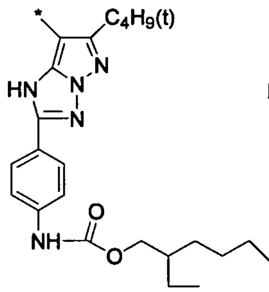

B8-14
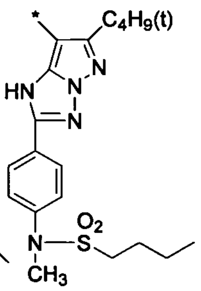

B8-15
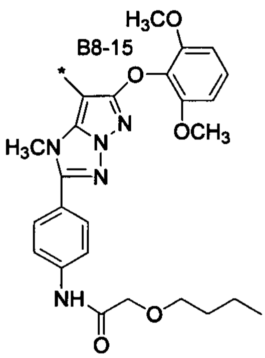

B8-16
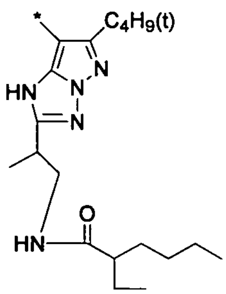

B8-17
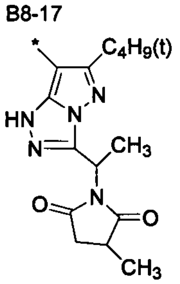

B8-18
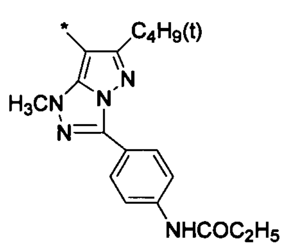

B8-19
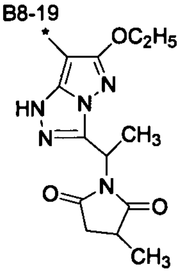

B8-20
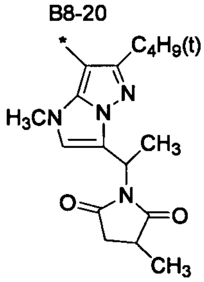

[Chem. 49]

B9-01

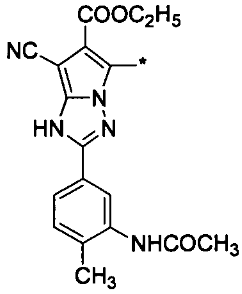

B9-02

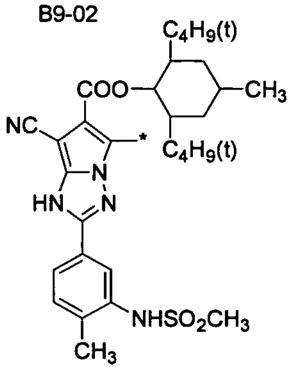

B9-03

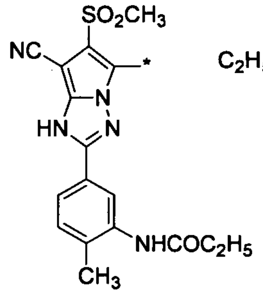

B9-04

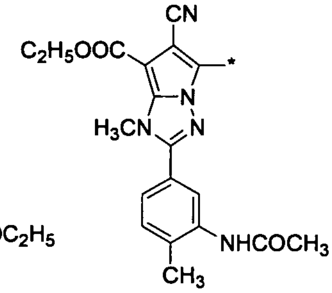

B9-05

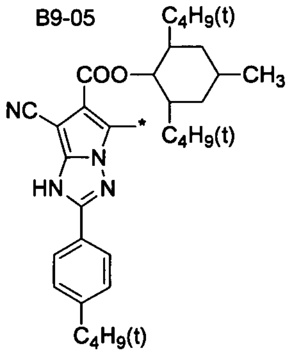

B9-06

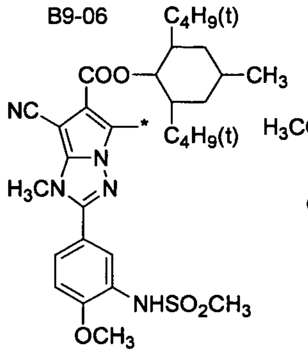

B9-07

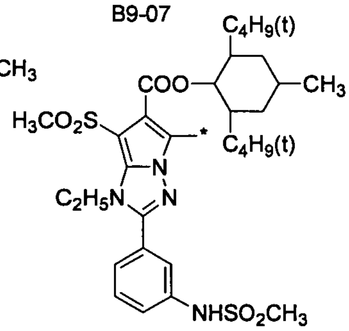

B9-08

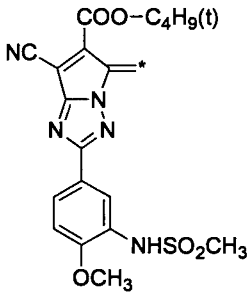

B9-09

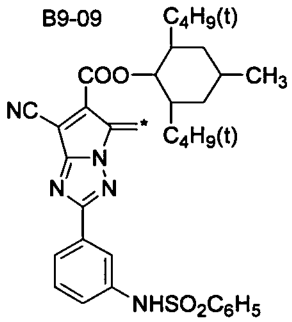

B9-10

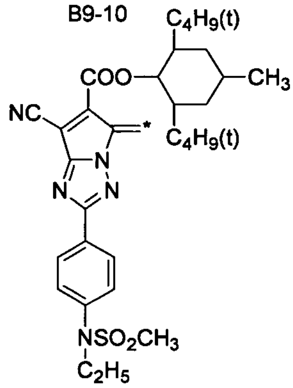

B9-11

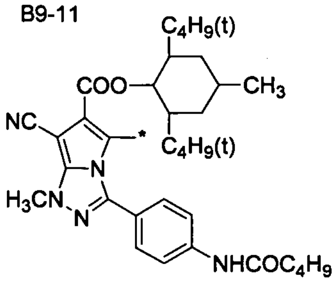

The compounds given below are examples of preferable combinations of the specific examples of moieties A and B given above. However, the dye employed in the present invention is not limited to the examples of compounds

given below. In the following table, * is put on the more preferable example compounds.
[Table 2]

| Example compound | $A^1$moiety | B moiety |
|---|---|---|
| D1-1* | A1-01 | B1-01 |
| D 1-2* | A1-03 | B1-02 |
| D1-3* | A1-07 | B1-05 |
| D 1-4* | A1-08 | B1-06 |
| D1-5* | A1-08 | B1-01 |
| D 1-6* | A1-10 | B1-07 |
| D 1-7* | A1-10 | B1-01 |
| D1-8* | A1-12 | B1-11 |
| D 1-9* | A1-12 | B1-01 |
| D1-10* | A1-15 | B1-13 |
| D1-11* | A1-16 | B1-17 |
| D1-12* | A1-11 | B1-03 |
| D1-13* | A1-01 | B3-02 |
| D 1-14* | A1-03 | B7-01 |
| D 1-15* | A1-02 | B7-07 |
| D 1-16* | A1-08 | B7-10 |
| D 1-17* | A1-05 | B7-18 |
| D 1-18* | A1-01 | B7-19 |
| D 1-19* | A1-01 | B8-02 |
| D1-20* | A1-08 | B8-03 |
| D1-21* | A1-10 | B8-07 |
| D-22* | A1-12 | B8-17 |
| D1-23 | A1-03 | B9-11 |
| D1-24 | A1-12 | B9-15 |
| D1-25 | A1-16 | B9-16 |
| D-26* | A2-02 | B-01 |
| D-27* | A2-08 | B-02 |
| D1-28* | A2-09 | B1-11 |
| D1-29 | A3-08 | B1-11 |
| D1-30 | A4-04 | B1-01 |
| D1-31 | A5-2 | B1-01 |
| D1-32* | A1-01 | B1-02 |
| D1-33* | A1-01 | B1-05 |
| D1-34* | A1-01 | B1-07 |
| D1-35* | A1-01 | B1-14 |
| D1-36* | A1-10 | B1-05 |

(continued)

| Example compound | $A^1$moiety | B moiety |
|---|---|---|
| D1-37* | A1-10 | B1-11 |
| D1-38* | A1-12 | B1-03 |
| D1-39* | A1-12 | B1-14 |
| D1-40* | A1-12 | B1-02 |
| D1-41* | A1-13 | B1-01 |
| D1-42* | A1-17 | B1-01 |
| D1-43* | A1-13 | B1-03 |
| D1-44* | A1-13 | B2-01 |
| D1-45* | A1-18 | B1-01 |
| D1-46* | A1-17 | B1-02 |
| D1-47* | A1-10 | B1-06 |
| D1-48* | A1-10 | B1-08 |
| D1-49* | A1-12 | B1-05 |
| D1-50* | A1-10 | B1-14 |
| D2-1* | A6-01 | B1-01 |
| D2-2* | A6-03 | B1-01 |
| D2-3* | A6-08 | B1-01 |
| D2-4* | A6-05 | B1-01 |
| D2-5 * | A6-01 | B1-03 |
| D2-6* | A6-01 | B1-14 |
| D2-7* | A6-03 | B1-02 |
| D2-8* | A6-03 | B1-14 |
| D2-9* | A6-05 | B1-14 |
| D2-10* | A7-01 | B1-01 |
| D2-11 * | A7-08 | B1-03 |
| D2-12* | A7-10 | B1-14 |
| D2-13 | A7-02 | B7-01 |
| D2-14 | A7-02 | B7-18 |
| D2-15 | A7-01 | B8-03 |
| D2-16 | A10-03 | B1-01 |
| D2-17 | A10-04 | B1-01 |
| D2-18 | A10-10 | B1-01 |
| D2-19 | A10-11 | B1-01 |
| D2-20 | A10-04 | B1-15 |
| D2-21 | A10-10 | B-16 |
| D2-22 | A6-04 | B1-01 |
| D2-23 | A6-08 | B7-12 |
| D2-24 | A7-02 | B8-16 |

(continued)

| Example compound | $A^1$moiety | B moiety |
|---|---|---|
| D2-25 * | A6-01 | B3-06 |
| D2-26 * | A7-02 | B3-06 |
| D2-27* | A7-07 | B1-01 |
| D2-28* | A7-07 | B7-19 |
| D2-29 * | A7-02 | B1-06 |
| D2-30* | A7-02 | B1-14 |
| D3-1 * | A8-03 | B-01 |
| D3-2 * | A8-05 | B1-01 |
| D3-3 * | A8-10 | B1-01 |
| D3-4 * | A8-14 | B1-01 |
| D3-5 * | A8-17 | B1-01 |
| D3-6* | A8-09 | B1-03 |
| D3-7* | A8-12 | B1-15 |
| D3-8* | A8-16 | B1-01 |
| D3-9* | A8-16 | B1-04 |
| D3-10* | A8-03 | B7-01 |
| D3-11 * | A8-05 | B7-07 |
| D3-12 * | A8-10 | B7-10 |
| D3-13 * | A8-14 | B7-01 |
| D3-14 * | A8-17 | B7-10 |
| D3-15 * | A8-09 | B7-15 |
| D3-16* | A8-12 | B7-18 |
| D3-17* | A8-16 | B7-19 |
| D3-18* | A8-16 | B7-17 |
| D3-19 | A8-03 | B3-06 |
| D3-20 | A8-06 | B3-01 |
| D3-21 * | A8-03 | B8-01 |
| D3-22* | A8-07 | B8-07 |
| D3-23 * | A8-15 | B8-16 |
| D3-24 * | A8-15 | B8-15 |
| D3-25 * | A8-06 | B8-04 |
| D3-26* | A9-01 | B1-01 |
| D3-27* | A9-06 | B1-01 |
| D3-28* | A9-07 | B1-01 |
| D3-29* | A9-09 | B1-01 |
| D3-30* | A9-11 | B1-01 |
| D3-31 * | A9-12 | B-01 |
| D3-32* | A9-13 | B-01 |

(continued)

| Example compound | $A^1$moiety | B moiety |
|---|---|---|
| D3-33 * | A9-14 | B-01 |
| D3-34 * | A9-15 | B1-01 |
| D3-35* | A9-16 | B1-01 |
| D3-36* | A9-06 | B7-01 |
| D3-37* | A9-07 | B7-07 |
| D3-38* | A9-16 | B7-18 |
| D3-39* | A9-11 | B7-19 |
| D3-40* | A9-15 | B3-01 |
| D3-41 * | A9-01 | B8-03 |
| D3-42 * | A9-06 | B8-07 |
| D3-43 * | A9-07 | B8-05 |
| D3-44 * | A9-09 | B8-16 |
| D3-45 * | A9-11 | B8-15 |
| D3-46* | A9-12 | B8-04 |
| D3-47 * | A9-13 | B8-11 |
| D3-48* | A9-14 | B8-15 |
| D3-49* | A9-15 | B8-14 |
| D3-50* | A9-16 | B8-13 |
| D4-1 * | A11-02 | B-01 |
| D4-2* | A11-06 | B1-01 |
| D4-3 * | A11-11 | B-01 |
| D4-4 * | A11-07 | B1-01 |
| D4-5 * | A11-03 | B1-01 |
| D4-6* | A11-11 | B-14 |
| D4-7 | A11-11 | B8-10 |
| D4-8* | A11-11 | B1-02 |
| D4-9* | A11-07 | B1-17 |
| D4-10* | A11-07 | B1-03 |
| D4-11* | A11-11 | B1-03 |
| D4-12 | A11-11 | B1-02 |
| D4-13 * | A11-11 | B1-11 |
| D4-14* | A11-07 | B1-16 |
| D4-15* | A11-07 | B1-15 |
| D4-16* | A11-02 | B1-03 |
| D4-17* | A11-06 | B1-13 |
| D4-18* | A11-11 | B1-07 |
| D4-19 * | A11-07 | B8-06 |
| D4-20 | A11-03 | B9-01 |

(continued)

| Example compound | $A^1$moiety | B moiety |
|---|---|---|
| D4-21 | A1-02 | B4-01 |
| D4-22 | A1-01 | B5-03 |
| D4-23 | A1-05 | B6-03 |
| D4-24 | A9-06 | B9-02 |
| D4-25 | A1-08 | B4-01 |
| D4-26 | A1-10 | B5-01 |
| D4-27 | A1-15 | B6-03 |

The dye denoted by general formula (I) can be synthesized by oxidation coupling of a coupler corresponding to A and a compound in which an amine is substituted with B. Specifically, synthesis may be conducted based on the methods described in Japanese Unexamined Patent Publication (KOKAI) Nos. 2001-342364 and 2004-51873, Japanese Unexamined Patent Publication (KOKAI) Heisei No. 07-137455, and Japanese Unexamined Patent Publication (KOKAI) Showa No. 61-31292 or English language family member US Patent No. 4,829,047. The contents of these publications are expressly incorporated herein by reference in their entirety.

When the dye denoted by general formula (I) is capable of becoming a tautomer structure through the migration of a proton, dyes of that structure are also included among the dyes denoted by general formula (I).

The dyes denoted by general formulas (100) to (106) are preferable examples of the dye denoted by general formula (I).

[Chem. 50]

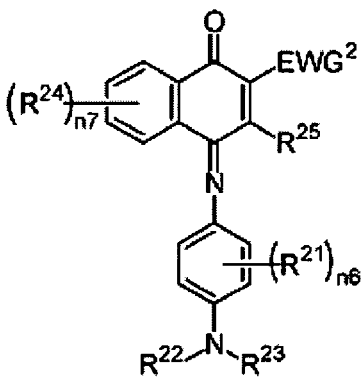

General formula (100)

[In general formula (100), $EWG^2$ denotes an electron-withdrawing group, $R^{21}$, $R^{22}$, $R^{23}$, and $R^{24}$ each independently denote a monovalent substituent, $R^{25}$ denotes a hydrogen atom or a monovalent substituent, n6 and n7 each independently denote an integer ranging from 0 to 4.]

[Chem. 51]

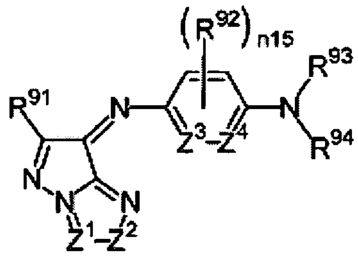

General formula (101)

[In general formula (101), $R^{91}$ denotes a hydrogen atom or a monovalent substituent, $R^{93}$ and $R^{94}$ each independently denote a substituted or unsubstituted alkyl group, substituted or unsubstituted aryl group, or substituted or unsubstituted heterocyclic group, $R^{92}$ denotes a monovalent substituent, n15 denotes an integer ranging from 0 to 2, among $Z^1$ and $Z^2$, one denotes =N-, and the other denotes =C($R^{95}$)-, $Z^3$ and $Z^4$ each independently denote =N- or =C($R^{96}$)-, $R^{95}$ and $R^{96}$ each independently denote a hydrogen atom or a monovalent substituent.]

[Chem. 52]

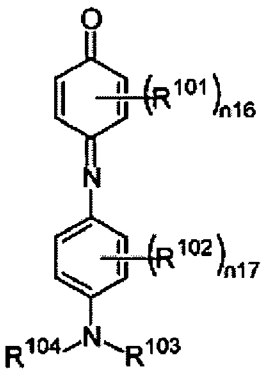

General formula (102)

[In general formula (102), $R^{103}$ and $R^{104}$ each independently denote a substituted or unsubstituted alkyl group, substituted or unsubstituted aryl group, or substituted or unsubstituted heterocyclic group, $R^{101}$ and $R^{102}$ each independently denote a monovalent substituent, n16 and n17 each independently denote an integer ranging from 0 to 4.]

[Chem. 53]

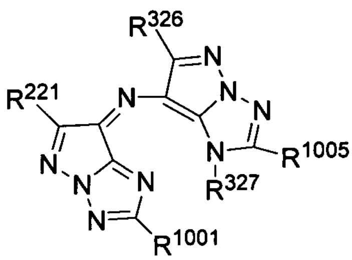

General formula (103)

[In general formula (103), $R^{221}$, $R^{326}$, $R^{327}$, $R^{1001}$, and $R^{1005}$ each independently denote a hydrogen atom or substituent.]

[Chem. 54]

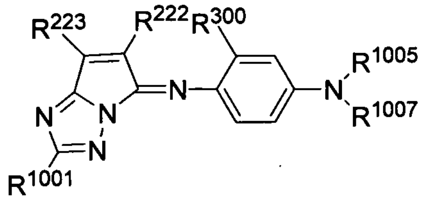

General formula (104)

[In general formula (104), $R^{222}$, $R^{223}$, $R^{300}$, $R^{1001}$, and $R^{1005}$ each independently denote a hydrogen atom or a substituent, and $R^{1007}$ denotes a substituent.]

[Chem. 55]

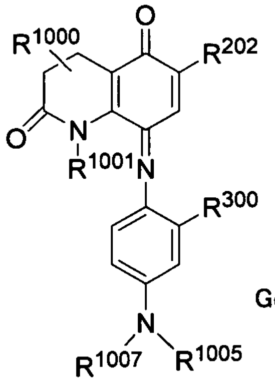

General formula (105)

[In general formula (105), $R^{202}$, $R^{300}$, $R^{1001}$, and $R^{1005}$ each independently denote a hydrogen atom or a substituent, $R^{1000}$ and $R^{1007}$ each independently denote a substituent.]

[Chem. 56]

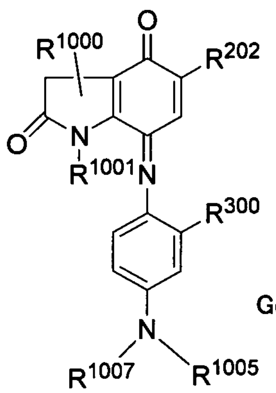

General formula (106)

[In general formula (106), $R^{202}$, $R^{300}$, $R^{1001}$, and $R^{1005}$ each independently denote a hydrogen atom or a substituent, $R^{1000}$ and $R^{1007}$ each independently denote a substituent.]

The compounds denoted by general formulas (100) to (106) will be sequentially described below.

General Formula (100)

The compound denoted by general formula (100) is the compound denoted by general formula (I) in which A moiety is (A -1) and B moiety is (B-1), with $R^{200}$ and $R^{201}$ in (A-1) being bonded together to form a ring.
In general formula (100), $EWG^2$ denotes an electron-withdrawing group having a Hammett's substituent constant $\sigma_p$ value of equal to or greater than 0, the details of which are as set forth for $R^{202}$ in (A-1) above.
The Hammett's substituent constant $\sigma_p$ value will be described to some extent below. The Hammett rule is an empirical rule proposed by L.P. Hammett in 1935 for quantitatively accounting for the effects of substituents on benzene derivative reactions or equilibria. Its validity is currently widely recognized. The substituent constants calculated by the Hammett rule include $\sigma_p$ and $\sigma_m$ values. These values are described in a lot of general literatures. For example, details are given in J. A. Dean, ed., "Lange's Handbook of Chemistry", 12th Ed., 1979 (McGraw-Hill) and "The Domain of Chemistry", Special Edition, Issue No. 122, pp. 96-103 (Nankodo). The contents thereof are expressly incorporated herein by reference in their entirety. In the present Specification, various substituents are defined and described by Hammett's substituent constant $\sigma_p$. However, this does not mean that they are limited to those substituents that can be found in the above general literatures, having values known in the literatures. Substituents that would be expected to fall within the ranges that are given when measured based on Hammett's rule are also included, even when those values are unknown in the literatures. The above general formulas include compounds that are not benzene derivatives. The $\sigma_p$ value is employed as a yardstick of the electron effects of substituents, irrespective of the substitution site. That is the meaning of the $\sigma_p$ value as employed in the present invention.
$R^{25}$ in general formula (100) denotes a hydrogen atom or monovalent substituent, the details of which are identical to those set forth above for $R^{203}$ in (A-1).
$R^{24}$ in general gormula (100) denotes a monovalent substituent, the details of which are identical to those set forth above for the substituent. n7 denotes an integer ranging from 0 to 4, with 0 being preferable.
$R^{21}$, $R^{22}$, and $R^{23}$ in general formula (100) each independently denotes a monovalent substituent, the details of which are identical to those set forth above. In general formula (100), n6 denotes an integer ranging from 0 to 4, with 1 being preferable.

General Formula (101)

The compound denoted by general formula (101) is the compound denoted by general formula (I) in which A moiety denotes (A-9) and B moiety denotes (B-1), (B-2), or (B-3).
In general formula (101), $R^{91}$ denotes a hydrogen atom or a monovalent substituent, the details of which are identical to those of $R^{221}$ in (A-9) set forth above.
In general formula (101), either $Z^1$ and $Z^2$ denotes =N- and the other denotes =C($R^{95}$)-, where $R^{95}$ denotes a hydrogen atom or a monovalent substituent. The details of the substituent are identical to those set forth above.
In general formula (101), $R^{93}$ and $R^{94}$ each independently denote a substituted or unsubstituted alkyl group, substituted or unsubstituted aryl group, or substituted or unsubstituted heterocyclic group; are preferably a hydrogen atom, substituted or unsubstituted alkyl group, substituted or unsubstituted alkenyl group, substituted or unsubstituted aryl group, or substituted or unsubstituted heterocyclic group; more preferably a hydrogen atom or a substituted or unsubstituted alkyl group; further preferably a substituted or unsubstituted alkyl group having 1 to 6 carbon atoms, still further preferably a substituted or unsubstituted alkyl group having 1 to 6 carbon atoms.
In general formula (101), $R^{92}$ denotes a monovalent substituent, the details of which are identical to those set forth above. In general formula (101), n15 denotes an integer ranging from 0 to 2, preferably 0 or 1, and more preferably 1.
$Z^3$ and $Z^4$ in general formula (101) each independently denotes =N- or =C($R^{96}$)-, and $R^{95}$ and $R^{96}$ each independently denotes a hydrogen atom or a monovalent substituent. The details of the substituent are identical to those set forth above.

General Formula (102)

The compound denoted by general formula (102) is the compound denoted by general formula (I) in which A moiety denotes (A-1) and B moiety denotes (B-1).
In general formula (102), $R^{101}$ and $R^{102}$ are each independently a monovalent substituent, the details of which are as set forth above. n16 and n17 are each independently an integer ranging from 0 to 4, with n16 preferably being an integer ranging from 1 to 3 and n17 preferably being an integer ranging from 0 to 2, more preferably 0 or 1.
In general formula (102), $R^{103}$ and $R^{104}$ each independently denote a substituted or unsubstituted alkyl group, substituted or unsubstituted aryl group, or substituted or unsubstituted heterocyclic group; are preferably a substituted or unsubstituted alkyl group or substituted or unsubstituted aryl group; and more preferably a substituted or unsubstituted alkyl group.

General Formula (103)

The compound denoted by General Formula (103) is the compound denoted by general formula (I) in which A moiety denotes (A-9) and B moiety denotes (B-8). In general formula (103), $R^{221}$, $R^{326}$, $R^{327}$, $R^{1001}$, and $R^{1005}$ are each independently a hydrogen atom or a substituent. The details of $R^{221}$ in general formula (103) are identical to those set forth for $R^{221}$ in (A-9). The details of $R^{326}$ and $R^{327}$ in general formula (103) are identical to those set forth for $R^{326}$ and $R^{327}$ in (B-8) above. The details of $R^{1001}$ in general formula (103) are identical to those set forth for $R^{1001}$, which can be contained in A moiety above. The details of $R^{1005}$ in general formula (103) are identical to those set forth for $R^{1005}$, which can be contained in B moiety above.

General Formula (104)

The compound denoted by general formula (104) is the compound denoted by general formula (I) in which A moiety denotes (A-11) and B moiety denotes (B-1). In general formula (104), $R^{222}$, $R^{223}$, $R^{300}$, $R^{1001}$, and $R^{1005}$ are each independently a hydrogen atom or a substituent. $R^{1007}$ is a substituent. The details of $R^{222}$ and $R^{223}$ in general formula (104) are identical to those set forth above for $R^{222}$ and $R^{223}$ in (A-11). The details of $R^{330}$ in general formula (104) are identical to those set forth for $R^{330}$ in (B-1) above. The details of $R^{1001}$ in general formula (104) are identical to those set forth for $R^{1001}$, which can be contained in A moiety above. The details of $R^{1005}$ and $R^{1007}$ in general formula (104) are identical to those set forth for $R^{1005}$ and $R^{1007}$ which can be contained in B moiety.

General Formula (105)

The compound denoted by general formula (105) is the compound denoted by general formula (I) in which A moiety denotes (A-1) and B moiety denotes (B-1). In general formula (105), $R^{202}$, $R^{300}$, $R^{1001}$, and $R^{1005}$ are each independently a hydrogen atom or a substituent. $R^{1000}$ and $R^{1007}$ are each independently a substituent. The details of $R^{202}$ in general formula (105) are identical to those for $R^{202}$ in (A-1) above. The details of $R^{300}$ in general formula (105) are identical to those for $R^{300}$ in (B-1) above. The details of $R^{1000}$ and $R^{1001}$ in general formula (105) are identical to those set forth for $A^{1000}$ and $R^{1001}$ that can be contained in A moiety above. The details of $R^{1005}$ and $R^{1007}$ in general formula (105) are identical to those set forth for $R^{1005}$ and $R^{1007}$ that can be contained in B moiety above.

General Formula (106)

The compound denoted by general formula (106) is the compound denoted by general formula (I) in which A moiety denotes (A-1) and B moiety denotes (B-1). In general formula (106), $R^{202}$, $R^{300}$, $R^{1001}$, and $R^{1005}$ are each independently a hydrogen atom or a substituent. $R^{1000}$ and $R^{1007}$ are each independently a substituent. The details of $R^{202}$ in general formula (106) are identical to those set forth for $R^{202}$ in (A-1). The details of $R^{300}$ in general formula (106) are identical to those set forth for $R^{300}$ in (B-1) above. The details of $R^{1000}$ and $R^{1001}$ in general formula (106) are identical to those set forth for $A^{1000}$ and $R^{1001}$ that can be contained in A moiety above. The details of $R^{1005}$ and $R^{1007}$ in general formula (106) are identical to those set forth for $R^{1005}$ and $R^{1007}$ that can be contained in B moiety above.

Above-described Example Compounds D1-41 to 43, 45, and 46 are preferable specific examples of the compound denoted by general formula (100). Above described Example Compounds D3-27 to D3-35 are preferable specific examples of the compound denoted by general formula (101). Above-described Example Compounds D1-1 to 5 and 32 to 34 are preferable specific examples of the compound denoted by general formula (102). Above-described Example Compounds D3-41 and 42 to 50 are preferable specific examples of the compound denoted by general formula (103). Above-described Example Compounds D4-1 to 5, 8, 10, 11, 13, 16, and 18 are preferable specific examples of the compound denoted by general formula (104). Above-described Example Compounds D1-6, 7, 36, 37, 47, and 48 are preferable specific examples of the compound denoted by general formula (105). Above-described Example Compounds D1-8, 9, 38, 40, and 49 are preferable specific examples of the compound denoted by general formula (106).

Some of the dyes denoted by general formulas (100) to (106) are available as commercial products. Those that are not available commercially can be synthesized by the methods described in the following literature: U.S. Application Ser. No. 07/059,442; U.S. Patent 3,770,370; Japanese Unexamined Patent Publication (KOKAI) No. 2004-51873; German Patent 2,316,755; Japanese Unexamined Patent Publication (KOKAI) Heisei No. 7-137455; Japanese Unexamined Patent Publication (KOKAI) Showa No. 61-31292; J. Chem. Soc. Perkin transfer I, 1977, 2047; and Champan, "Merocyanine Dye-Donor Element Used in Thermal Dye Transfer", which are expressly incorporated herein by reference in their entirety.

<Visible information recording layer>

The optical recording medium of the present invention comprises a dye denoted by general formula (I) in a visible recording layer. In the present invention, the various dyes can be employed singly, or two or more suitable dyes can be combined as needed for use based on a desired tone. For example, the dyes denoted by general formulas (100) and (102) are cyan dyes, and the dye denoted by general formula (101) is a magenta dye.
Each of the above-described dyes absorbs an irradiated laser beam and undergoes photothermal conversion. The heat that is produced decomposes the dye, reducing the absorption of light in the visible light region. Thus, a difference in tone is produced with areas in which color is exhibited by dye that has not been decomposed, producing visible information such as an image in the visible information recording layer.
The above-described dyes preferably have an absorbance of equal to or greater than 0.5 (more preferably 0.1 to 1.0) for laser beams in the wavelength region of 400 to 850 nm. When the dyes have such an absorbance, it is possible to record visible information such as characters, images, patterns, and the like with good visibility by irradiation with a laser beam.
The visible information recording layer can be formed by coating a coating liquid prepared by dissolving the dyes in a solvent. Any of the various solvents suitable for use in the preparation of coating liquids for recording layers, described further below, may be employed. The details of other additives, the coating method, and the like, are as set forth further below for the recording layer.
The above dyes preferably constitute the principal component of the above visible information recording layer. In the present invention, the term "principal component" means that the content of the dye (total content of dyes when plural dyes are employed) is equal to or greater than 50 mass percent of the total solid component of the visible information recording layer. The dye content of the visible information recording layer preferably constitutes equal to or greater than 80 mass percent, more preferably 90 to 100 mass percent.
The thickness of the visible information recording layer is preferably 0.01 to 200 micrometers, more preferably 0.05 to 150 micrometers, and further preferably, 0.1 to 50 micrometers. The ratio of the thickness of the visible information recording layer to that of the recording layer (thickness of visible information recording layer/thickness of recording layer) preferably ranges from 1/100 to 100/1, more preferably from 1/10 to 10/1.
The visible information that is recorded on the visible information recording layer means information that can be identified visually, including all visibly recognizable information such as characters (strings), patterns, and graphics. Examples of character information is: information specifying allowed users, information specifying possible use periods, information specifying frequency of use, rental information, information specifying resolution, information specifying layers, information specifying users, copyright information, copyright number information, manufacturer information, manufacturing date information, sale date information, information on store where sold or seller, use set number information, information specifying a region, information specifying language, information specifying applications, information on the product user, and information on use numbers.

<Layer Structure>

The optical recording medium of the present invention may comprise, for example, a first support, a recording layer capable of recording and/or reproducing information by the irradiation of a laser beam, a reflective layer, a visible information recording layer, and a second support in this order. However, the layer structure of the optical recording medium of the present invention is not specifically limited other than that there be a visible information recording layer on a support and that the visible information recording layer comprises the above-described dye. A variety of layer structures are thus possible. Fig. 1 (a schematic cross-sectional view) shows an example of the optical recording medium of the present invention.
The optical recording medium 10 shown in Fig. 1 is comprised of a first support 16, a recording layer 18 formed over first support 16, a first reflective layer 20 formed over recording layer 18, an adhesive layer 22 formed over first reflective layer 20, a second reflective layer 24 formed over adhesive layer 22, a visible information recording layer 14 formed over second reflective layer 24, and a second support 26 formed over visible information recording layer 14. The optical recording medium may be of the read only, recordable, or rewritable type, but the recordable type is desirable. When of the recordable type, the form of recording is not specifically limited; recording may be accomplished by phase change, photomagnetically, with dyes, or the like. However, recording with dyes is desirable.
The following are examples of the layer structure of the optical recording medium of the present invention:

(1) The first layer structure, as shown in Fig. 1, is comprised of a first support 16, on which are sequentially formed a recording layer 18, a first reflective layer 20, an adhesive layer 22, and a second reflective layer 24. On second reflective layer 24 are provided a visible information recording layer 14 and a second support 26.
(2) The second layer structure, not shown in the drawing, is comprised of a first support 16, on which are sequentially

formed a recording layer 18, a first reflective layer 20, and an adhesive layer 22. On adhesive layer 22 are provided a visible information recording layer 14 and a second support 26.

(3) The third layer structure, not shown in the drawing, is comprised of a first support 16, on which are sequentially formed a recording layer 18, a first reflective layer 20, a protective layer, and an adhesive layer 22. On adhesive layer 22 are provided a visible information recording layer 14 and a second support 26.

(4) The fourth layer structure, not shown in the drawing, is comprised of a first support 16, on which are sequentially formed a recording layer 18, a first reflective layer 20, a first protective layer, an adhesive layer 22, and a second protective layer. On the second protective layer are provided a visible information recording layer 14 and a second support 26.

(5) The fifth layer structure, not shown, is comprised of a first support 16, on which are sequentially formed a recording layer 18, a first reflective layer 20, a first protective layer, an adhesive layer 22, a second protective layer, and a second reflective layer 24. On second reflective layer 24 are provided a visible information recording layer 14 and a second support 26.

Layer structures (1) to (5) are merely examples. These layer structures need not necessarily be in the above-stated sequences; some replacement is possible. Partial omission is also possible. Further, each layer may be constituted of a single layer or multiple layers.

When the optical recording medium of the present invention is a CD-R, it is preferably comprised of a first support 16, in the form of a transparent disk 1.2 ± 0.2 mm in thickness on which are formed pregrooves 28 (see Fig. 1) at a track pitch of 1.4 to 1.8 micrometers, on which are sequentially provided a recording layer 18, a first reflective layer 20, a protective layer, an adhesive layer 22, a second reflective layer 24, a visible information recording layer 14 containing the above-described dyes, and a second support 26. When applied to a DVD-R, the following two forms are preferable:

(1) An optical information recording medium comprised of two laminated members, each of which is comprised of a first support 16 in the form of a transparent disk 0.6 ± 0.1 mm in thickness on which are formed pregrooves 28 at a track pitch of 0.6 to 0.9 micrometer, on which are sequentially provided a recording layer 18 and a light-reflecting layer, the two laminated members being bonded with their respective recording layers 18 facing inward, with a visible information recording layer 14 that is 1.2 ± 0.2 mm in thickness being formed on at least the first support 16 of one of the two.

(2) An optical information recording medium comprised of a laminated member being comprised of a first support 16 in the form of a transparent disk 0.6 ± 0.1 mm in thickness on which are formed pregrooves 28 at a track pitch of 0.6 to 0.9 micrometer, on which are formed a recording layer 18 and a light-reflecting layer; and a transparent disk-shaped protective support of the same shape as the disk-shaped first support 16 of the laminated member, the laminated member and the protective support being bonded with the recording layer 18 facing inward, with a visible information recording layer 14 that is 1.2 ± 0.2 mm in thickness being provided on the support of at least one of the two. In the above DVD-R optical information recording media, a configuration is also possible in which a protective layer is further provided on the light-reflecting layer.

Each of the above-mentioned layers and support will be sequentially described below.

<Recording Layer>

The recording layer in the optical recording medium of the present invention is a layer that is capable of recording and/or reproducing information when irradiated with a laser beam. The recording layer is a layer that can record encoded information such as digital information. For example, it may be of a recording (preferably a dye recording), phase-changing, or photomagnetic type; there is no specific limitation. However, a dye type is desirable.

Specific examples of the dyes contained in a dye-type recording layer are cyanine dyes, oxonol dyes, metal complex dyes, azo dyes, and phthalocyanine dyes. The dyes described in Japanese Unexamined Patent Publication (KOKAI) Heisei Nos. 4-74690, 8-127174, 11-53758, 11-334204, 11-334205, 11-334206, and 11-334207; and Japanese Unexamined Patent Publication (KOKAI) Nos. 2000-43423, 2000-108513, and 2000-158818 may also be suitably employed. The contents of the above publications are expressly incorporated herein by reference in their entirety

The above recording layer can be formed by dissolving a recording substance such as a dye in a suitable solvent along with a binder or the like to prepare a coating liquid, coating the coating liquid to a support to form a coating, and then drying the coating. The concentration of the recording substance in the coating liquid generally falls within a range of 0.01 to 15 mass percent, preferably within a range of 0.1 to 10 mass percent, more preferably within a range of 0.5 to 5 mass percent, and further preferably, within a range of 0.5 to 3 mass percent.

The recording layer may be formed by a method such as vapor deposition, sputtering, CVD, or solvent coating. Of these, the use of solvent coating is desirable. In that case, the coating liquid is prepared by dissolving optionally

desired quenchers, binders, and the like along with the dyes in a solvent. Next, the coating liquid is coated to the surface of a support to form a coating. The coating is then dried, yielding the recording layer.

Examples of solvents that are suitable for use in the coating liquid are: esters such as butyl acetate, ethyl lactate, and Cellosolve acetate; ketones such as methyl ethyl ketone, cyclohexanol, and methyl isopropyl ketone; chlorinated hydrocarbons such as dichloromethane, 1,2-dichloroethane, and chloroform; amides such as dimethyl formamide; hydrocarbons such as methyl cyclohexane; ethers such as dibutylether, diethylether, tetrahydrofuran, and dioxane; alcohols such as ethanol, n-propanol, isopropanol, n-butanol, and diacetone alcohol; fluorine-based solvents such as 2,2,3,3-tetrafluoropropanol; and glycol ethers such as ethylene glycol monomethyl ether, ethylene glycol monoethyl ether, and propylene glycol monomethyl ether.
These solvents may be employed singly or in combinations of two or more, taking into account the solubility of the dyes employed. To the coating liquid may be further added various additives such as oxidation inhibitors, UV absorbants, plasticizers, and lubricants based on the objective.

Examples of suitable binders when employing a binder are: natural organic polymeric substances such as gelatins, cellulose derivatives, dextran, rosin, and rubber; hydrocarbon resins such as polyethylene, polypropylene, polystyrene, and polyisobutylene; vinyl resins such as polyvinyl chloride, polyvinylidene chloride, and copolymers of polyvinyl chloride and polyvinyl acetate; acrylic resins such as polymethyl acrylate and polymethyl methacrylate; and synthetic organic polymers such as initial condensates of thermosetting resins such as polyvinyl alcohol, chlorinated polyethylene, epoxy resins, bunayral resins, rubber derivatives, and phenol formaldehyde resins.

When employing a binder in the recording layer, the quantity employed generally falls within a range of 0.01 to 50 times, preferably 0.1 to 5 times of the mass of dye.

Examples of methods of coating the above solvent coating are spraying, spin coating, dipping, roll coating, blade coating, using a doctor roll, and screen printing. Recording layer 18 may be a single layer or multiple layers. The thickness of recording layer 18 generally falls within a range of 10 to 500 nm, preferably within a range of 15 to 300 nm, and more preferably, within a range of 20 to 150 nm.

To enhance the photoresistance of the recording layer, various antifading agents may be incorporated. Singlet oxygen quenchers are generally employed as antifading agents. Known singlet oxygen quenchers that are described in publications such as patent specifications may be employed. Antifading agents such as singlet oxygen quenchers are normally employed in a quantity falling within a range of 0.1 to 50 mass percent, preferably within a range of 0.5 to 45 mass percent, more preferably within a range of 3 to 40 mass percent, and further preferably, within a range of 5 to 25 mass percent of the mass of the dyes.

Specific examples of materials included in phase changing-type recording layers are: Sb-Te alloy, Ge-Sb-Te alloy, Pd-Ge-Sb-Te alloy, Nb-Ge-Sb-Te alloy, Pd-Nb-Ge-Sb-Te alloy, Pt-Ge-Sb-Te alloy, Co-Ge-Sb-Te alloy, In-Sb-Te alloy, Ag-In-Sb-Te alloy, Ag-V-In-Sb-Te alloy, and Ag-Ge-In-Sb-Te alloy. The thickness of a phase changing-type recording layer 18 is preferably 10 to 50 nm, more preferably 15 to 30 nm. A phase changing-type recording layer may be formed by a vapor thin-film deposition method such as sputtering, vacuum deposition or the like.

<First Support>

First support 16 in the optical recording medium shown in Fig. 1 can be formed using any material selected from among the various materials conventionally employed as supports in optical recording media. Examples of the material employed in first support 16 are: glass; polycarbonate; acrylic resins such as polymethyl methacrylate; vinyl chloride resins such as polyvinyl chloride and vinyl chloride copolymers; epoxy resins; amorphous polyolefins; and polyesters. These may be employed in combination as needed. These materials may be employed in the form of films, or as a rigid first support 16. Of these materials, polycarbonate is desirable from the viewpoints of moisture resistance, dimensional stability, cost, and the like.
First support 16 is preferably 0.1 to 1.2 mm, more preferably 0.2 to 1.1 mm, in thickness.

To improve smoothness, increase adhesion, and prevent alteration of recording layer 18, an undercoating layer may be provided on the outer surface side (side on which pregrooves 28 are formed) of first support 16 on the side where recording layer 18 is provided.
Examples of the material used in the undercoating layer are: polymethyl methacrylate, acrylic acid - methacrylic acid copolymer, styrene - maleic anhydride copolymer, polyvinyl alcohol, N-methylol acrylamide, styrene - vinyl toluene copolymer, chlorosulfonated polyethylene, nitrocellulose, polyvinyl chloride, chlorinated polyolefin, polyester, polyimide, vinyl acetate - vinyl chloride copolymer, ethylene - vinyl acetate copolymer, polyethylene, polypropylene, polycarbonate, other polymeric substances, and surface-modifying agents such as silane coupling agents. The undercoating layer may be formed by preparing a coating liquid by dissolving or dispersing the above substance in a suitable solvent and coating the coating liquid by a coating method such as spin coating, dip coating, or extrusion coating to the surface of first support 16.
The thickness of the undercoating layer generally falls within a range of 0.005 to 20 micrometers, preferably within a

range of 0.01 to 10 micrometers.

<First Reflective Layer>

As shown in Fig. 1, a first reflective layer 20 may be provided adjacent to recording layer 18 for the purpose of improving reflectivity during the reproduction of information. The light-reflecting material serving as the material of first reflective layer 20 is a substance with high reflectance for laser beams, examples of which are metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi, as well as stainless steel. These substances may be employed singly, in combinations of two or more, or in the form of alloys. First reflective layer 20 may be formed on first support 16 or recording layer 18 by, for example, vapor deposition, sputtering, or ion plating the light-reflecting substance. The thickness of first reflective layer 20 generally falls within a range of 10 to 300 nm, preferably within a range of 50 to 200 nm.

<Adhesive Layer>

As shown in Fig. 1, an adhesive layer 22 can be formed to increase adhesion between first reflective layer 20 and second support 26.
The material included in adhesive layer 22 is preferably a photosetting resin. Of these, to prevent warping of the disk, a material with a low contraction rate upon curing is preferable. Examples of such thermosetting resins are UV-setting resins (UV-setting adhesives) such as "SD-640" and "SD-347" manufactured by Dainippon Ink and Chemicals, Inc. To impart elasticity, the thickness of adhesive layer 22 preferably falls within a range of 1 to 1,000 micrometers, more preferably a range of 5 to 500 micrometers, and further preferably, within a range of 10 to 100 micrometers.

<Second Support>

As shown in Fig. 1, a second support 26 (protective support) can be provided to protect visible information recording layer 14. Second support 26 can be formed from the same materials as above-described first support 16.

<Protective Layers>

Protective layers can be provided to physically and chemically protect first reflective layer 20, recording layer 18 and the like. In forms similar to the manufacturing of DVD-R optical recording media, that is, for configurations in which two supports (including cases where one of which is second support 26) are bonded with recording layer 18 facing inward, the formation of a protective layer is not necessarily required.
Examples of materials employed in protective layers are: inorganic substances such as ZnS, ZnS-$SiO_2$, SiO, $SiO_2$, $MgF_2$, $SnO_2$, and $Si_3N_4$; and organic substances such as thermoplastic resins, thermosetting resins, and UV-setting resins.
When employing thermoplastic or thermosetting resins, a coating liquid can be prepared by dissolving the resins in a suitable solvent and then coating and drying the coating liquid to form a protective layer. A UV-setting resin can be coated as is, or dissolved in a suitable solvent to prepare a coating liquid, which is then coated, then irradiated to cure the resin, forming a protective layer. Various additives, such as antistatic agents, oxidation inhibitors, and UV absorbants, can be added to the coating liquid based on the objective. Protective layers generally range from 0.1 micrometer to 1 mm in thickness.
The optical recording medium of the present invention can be applied as the optical recording medium comprising recording portions (pits) in which reproducible information is recorded by laser beam, that is so-called a read-only optical information recording medium.

[Method of recording visible information]

The first method of recording visible information of the present invention (referred to as "recording method I", hereinafter) is the method of recording visible information on the visible information recording layer of the optical recording medium of the present invention, wherein the visible information is recorded by using the same laser bean as that used in recording on the recording layer.
The second method of recording visible information of the present invention (referred to as "recording method II", hereinafter) is the method of recording visible information on the visible information recording layer of the disk-shaped optical recording medium of the present invention, wherein the visible information is recorded by using a laser beam that oscillates in a radial direction of the optical recording medium as well as is irradiated plural times on approximately identical paths. In recording method II, visible information is preferably recorded by using the same laser beam as that

used in recording on the recording layer, as in recording method I.
Recording methods I and II are sometimes collectively referred to as the "recording method of the present invention" hereinafter.

In recording method I, the same laser beam (laser beam 12 in Fig. 1) is employed to record visible information as the laser beam (laser beam 12 in Fig. 1) used to record information on the recording layer. Thus, the beam source can be shared in a single recording device, permitting a reduction in the hardware resources of the recording device to a minimum required level and readily permitting the recording of images by an ordinary user with such a device. Further, since the above-described dyes are incorporated into the visible information recording layer in the optical recording medium of the present invention, the advantage of being able to form images of high contrast and good visibility is achieved. The recording of visible information such as images on the visible information recording layer of the optical recording medium of the present invention is optimally conducted by the method of recording visible information of the present invention, but is not limited thereto.

In the recording method of the present invention, the recording of visible information such as images on the visible information recording layer and the recording of optical information on the recording layer can be conducted with a single optical disk drive (recording device) functioning to record on both layers. When a single optical disk drive is employed in this manner, following recording on either the visible information recording layer or the recording layer, the disk can be flipped over for recording on the other layer. For example, the optical disk drives described in Japanese Unexamined Patent Publication (KOKAI) Nos. 2003-203348, 2003-242750 and the like can be employed as optical disk drives having the function of recording visible information on the visible information recording layer. The contents of the above publications are expressly incorporated herein by reference in their entirety

When recording visible information on the visible information recording layer, the optical recording medium and the laser pickup can be moved relatively along the surface of the optical recording medium by the recording device. The laser beam can synchronize with this relative movement, and the laser beam can be modulated based on image data such as characters or drawings to be formed as images and directed onto the visible information recording layer to record a visible image. Such a configuration, for example, is described in Japanese Unexamined Patent Publication (KOKAI) No. 2002-203321 and the like, which is expressly incorporated herein by reference in its entirety.

In ordinary digital data recording, a laser beam is normally irradiated once over a roughly elliptical path. Generally, in the course of forming pits in the dye recording layer, the formation of pits producing adequate reflectance and an adequate degree of modulation for identification by the drive is considered important. Thus, dyes yielding adequate reflectance and an adequate degree of modulation by this single pass of the laser beam are selected as the dye in the dye recording layer.
By contrast, the system described in Japanese Unexamined Patent Publication (KOKAI) No. 2002-203321 has been proposed as a new method of image formation. The content of the above publication is expressly incorporated herein by reference in its entirety. In this system, a laser beam is irradiated plural times over roughly the same paths to record visible information such as an image on a visible information recording layer containing dye. Further, although the laser beam cannot be oscillated in a radial direction of the optical disk since the positions at which bits are radially formed are specified on common optical disks, in the above system, the laser beam oscillates in a radial direction of the optical disk and irradiated plural times over approximately the same paths to form visible information. The dyes employed in the present invention are all suited to this system and permit the formation by the above-described recording method of sharp visible information of high contrast and good resistance to light.

The above-mentioned image forming method will be described below in detail with reference to Figs. 2 and 3. Fig. 2 shows the path of the laser beam that is irradiated to form an image.
First, as shown in Fig. 2, the laser beam source is positioned radially at a spot where the initial image is to be formed along the inside perimeter of an optical disk. Next, the circumferential position θ is detected, and the laser power is switched to a prescribed high output (a value that changes the visible light characteristics of the visible information recording layer, such as equal to or greater than 1 mW) at various circumferential image formation positions indicated by the image data for the corresponding radial position. In this manner, the visible light characteristics of the visible information recording layer are changed (discolored or the like) at spots where the high-output laser beam has been irradiated, forming an image.
Subsequently, the optical disk is rotated once and returned to a circumferential reference position, a feed motor or the like displaces the laser beam source outward by the amount $\Delta r$ of a prescribed pitch, and the laser power is switched to a prescribed high output at various circumferential image formation positions indicated by the image data for the corresponding radial position to form an image. Subsequently, this operation is repeated and the laser beam source is sequentially displaced outward by a prescribed pitch $\Delta r$ each time around to form an image. Fig. 2 shows the path of the laser beam on the optical disk surface (surface on the visible information recording layer side, sometimes referred to as the "label surface", hereinafter) in this image forming operation. The portions drawn in bold lines indicate portions on which the laser power is switched to high output to form an image. Fig. 3 is an expanded view of the path of the laser beam in the portion drawn in bold lines. As shown in Fig. 3, the laser beam is oscillated in a radial direction of the optical

disk and irradiated in plural times on approximately the identical paths to form an image. The oscillating width of the laser beam and the number of laser beam irradiation on approximately the identical paths are determined for each recording device.

In the above image forming method, radial positions where there are no image formation spots are not scanned and the laser beam source is moved directly to the next radial location of an image formation spot to form an image. The larger pitch Δr is, the greater the gaps that are generated in the image that is formed, even in images that should normally be formed so as to be connected radially. The gaps can be rendered inconspicuous by reducing pitch Δr, but the number of passes required to form an image over the entire label surface increases and the time required for image formation ends up increasing. In the device described in Japanese Unexamined Patent Publication (KOKAI) No. 2002-203321, an oscillating signal (sine waves, chopping waves, or the like) generated by an oscillating signal generation circuit during image formation is used to drive a tracking actuator, causing an object lens to oscillate in a radial direction of the disk. In this manner, the laser beam is made to vibrate in a radial direction of the disk, permitting image formation in which there is no gap (or a small gap) even for a relatively large pitch Δr. The frequency of the oscillating signal can be set to about several kHz, for example. Pitch Δr can be set to about 50 to 100 micrometers, for example.
Japanese Unexamined Patent Publication (KOKAI) No. 2002-203321 can be referenced for details of the above image forming method. The content of the above publication is expressly incorporated herein by reference in its entirety

The recording device that records the optical information (digital information) on the recording layer comprises at least a laser pickup emitting a laser beam and a rotating mechanism that causes the optical recording medium to rotate, and is capable of recording on and reproducing from the recording layer by irradiating a laser beam from the laser pickup toward the recording layer of the optical recording medium while the latter is being rotated. Such a recording device configuration is known.

The recording of information (digital information) on the recording layer will be described below. In the case of a dye-type recording layer, a laser beam is irradiated by the laser pickup while rotating an unrecorded optical recording medium described above at a prescribed linear recording speed. The irradiated beam is absorbed by the dye in the recording layer, causing the temperature to rise locally. A desired void (bit) is generated, thereby changing the optical characteristics to record information.

When forming a single bit, the recording waveform of the laser beam can be either a series of pulses or a single pulse. The ratio to the length (the bit length) actually being recorded is important.
The pulse width of the laser beam preferably falls within a range of 20 to 95 percent, more preferably a range of 30 to 90 percent, and further preferably a range of 35 to 85 percent, of the bit length actually being recorded. When the recording waveform is a series of pulses, it means that the sum of the pulses falls within the above-stated range.

The power of the laser beam varies with the linear recording speed. At a linear recording speed of 3.5 m/s, the power preferably falls within a range of 1 to 100 mW, more preferably within a range of 3 to 50 mW, and further preferably within a range of 5 to 20 mW. When the linear recording speed is doubled, the range of the power of the laser beam is preferably adjusted $2^{1/2}$-fold. To increase the recording density, the NA of the object lens employed in the pickup is preferably equal to or greater than 0.55, more preferably equal to or greater than 0.6. In the present invention, a semiconductor laser having an oscillation wavelength falling within a range of 350 to 850 nm can be employed as the recording beam.

The case of a phase changing-type recording layer will be described below. In a phase changing type, the recording layer is comprised of the above-described substances and a laser beam is irradiated to change the phase back and forth between a crystalline phase and an amorphous phase. During information recording, a concentrated laser beam pulse is briefly irradiated, partially melting the phase changing recording layer. The melted portion is rapidly cooled by heat dispersion and solidifies, forming an amorphous recording mark. During deletion, the recording mark portion is irradiated by the laser beam, heating it to a temperature below the melting point of the recording layer but above its crystallization temperature. It is then gradually cooled, causing the amorphous recording mark to crystallize and return to an unrecorded state.

## EXAMPLES

The present invention will be described in detail below based on examples. However, the present invention is not limited to the examples.

(Example 1)

Example 1 of the optical information recording medium has the layer structure shown in Fig. 1. It is a DVD-R type optical recording medium comprised of two bonded disks. The method of manufacturing the optical recording medium of Example 1 will be described below.

A first support 16 that was 0.6 mm in thickness, 120 mm in diameter, and had spiral (helical) grooves (130 nm

deep, 300 nm in width, with a track pitch of 0.74 micrometers) was formed out of polycarbonate resin by injection molding. Subsequently, a coating liquid was prepared by dissolving 1.5 g each of the two oxonol dyes indicated below in 100 mL of 2,2,3,3-tetrafluoro-1-propanol. The coating liquid was coated by spin coating to the surface of first support 16 on which pregrooves 28 had been formed, yielding a recording layer 18 that was 80 micrometers thick.

[Chem. 57]

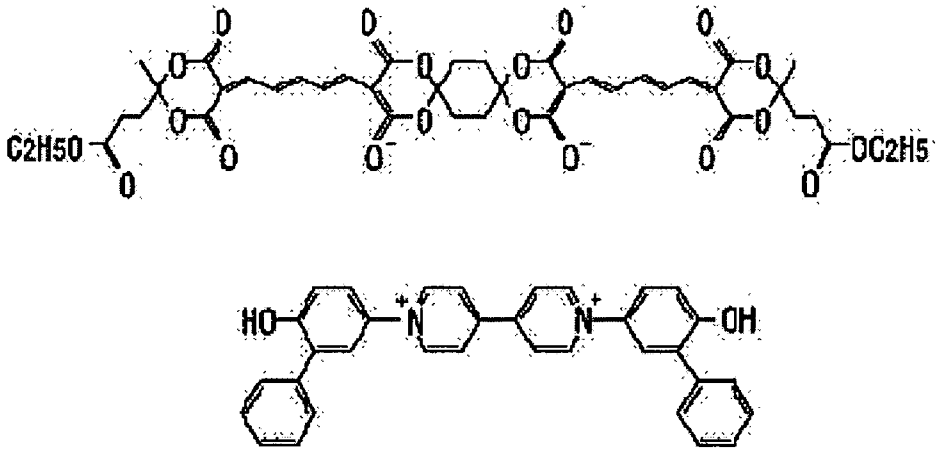

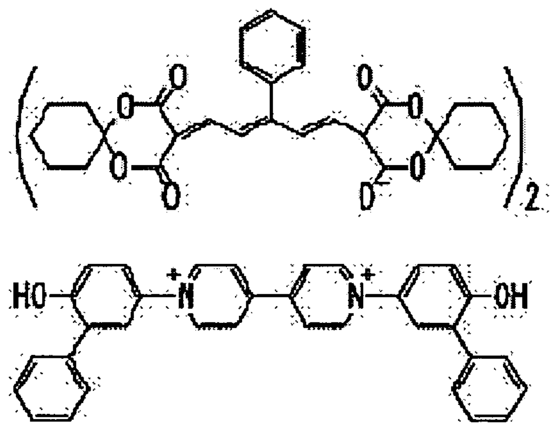

Next, silver was sputtered onto recording layer 18 to form a first reflective layer 20 that was 120 nm in thickness, UV-curing resin (SD318, made by Dainippon Ink and Chemicals, Inc.) was coated by spin coating, and UV radiation was irradiated to cure the resin, forming a first protective layer that was 10 micrometers in thickness. The above steps yielded a first disk.

To form a visible information recording layer 14, 1.0 g of Example Compound D1-1 was dissolved in 100 mL of 2,2,3,3-tetrafluoro-1-propanol to prepare a coating liquid for visible information recording layers. The coating liquid for visible information recording layers was spin coated on a second support 26 that was 0.6 mm in thickness and 120 mm in diameter to form a visible information recording layer 14 that was 100 micrometers in thickness.

Next, silver was sputtered onto visible information recording layer 14 to form a second reflective layer 24 that was 70 nm in thickness, UV-curing resin (SD318, made by Dainippon Ink and Chemicals, Inc.) was coated by spin coating, and UV radiation was irradiated to cure the resin, forming a second protective layer that was 10 micrometers

in thickness. The above steps yielded a second disk.

The first and second disks were bonded together to form a single disk by the following steps. First, a slow-acting cationic polymerization adhesive (SDK7000, made by Sony Chemicals Corp.) was printed by screen printing on both the first protective layer of the first disk and the second protective layer of the second disk. A printing plate with a mesh size of 300 was used for the screen printing. Next, immediately after using a metal halide lamp to irradiate UV radiation, the first and second disks were bonded on their protective layer sides. Pressure was applied from both sides and left in place for 5 minutes to prepare the optical recording medium of Example 1.

(Examples 2 to 20)

With the exception that the dyes employed in the visible information recording layer were changed to the following compounds, optical recording media were manufactured in the same manner as in Example 1. In the optical recording media of Examples 1 to 20, cyan dye was incorporated into the visible information recording layer to obtain an image by photothermal conversion. The dye (2) indicated by the following structure is a cyan dye. Example compounds which were used in combination with dye (2) were non-cyan dyes; those dyes not employed in combination were cyan dyes.

[Table 3]

| | |
|---|---|
| Example 2 | Example compound D1-15 |
| Example 3 | Example compound D1-19 |
| Example 4 | Example compound D1-38 |
| Example 5 | Example compound D2-1/dye (2)=0.6g/0.4g |
| Example 6 | Example compound D2-10/dye(2)=0.6g/0.4g |
| Example 7 | Example compound D2-26/dye(2)=0.6g/0.4g |
| Example 8 | Example compound D3-1/dye(2)=0.6g/0.4g |
| Example 9 | Example compound D3-10/dye(2)=0.6g/0.4g |
| Example 10 | Example compound D3-21/dye(2)=0.6g/0.4g |
| Example 11 | Example compound D3-36/dye(2)=0.6g/0.4g |
| Example 12 | Example compound D3-41/dye(2)=0.6g/0.4g |
| Example 13 | Example compound D1-4 |
| Example 14 | Example compound D 1-7 |
| Example 15 | Example compound D1-42 |
| Example 16 | Example compound D3-27/dye(2)=0.6g/0.4g |
| Example 17 | Example compound D3-33/dye(2)=0.6g/0.4g |
| Example 18 | Example compound D3-42/dye(2)=0.6g/0.4g |
| Example 19 | Example compound D3-49/dye(2)=0.6g/0.4g |
| Example 20 | Example compound D4-4 |

[Chem. 58]

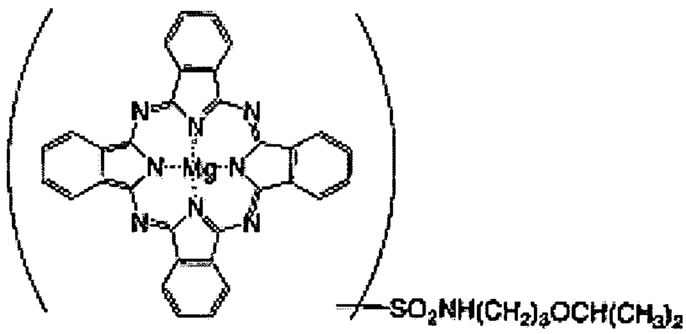

Dye (2)

(Contrast Evaluation)

Recording was conducted in the following manner with the optical recording media prepared in Examples 1 to 20. Using the recording device (the laser being a semiconductor laser with a wavelength of 660 nm) having a laser pickup emitting a laser beam and a rotation mechanism rotating the optical recording medium described in Japanese Unexamined Patent Publication (KOKAI) No. 2002-203321, while relatively moving the laser pickup along the surface of the optical recording medium, the semiconductor laser beam was synchronized with the relative movement and modulated based on desired image data. Under conditions of a linear speed of 3.5 m/s and a recording power of 8 mW, the focused laser beam was irradiated onto visible information recording layer 14 to record a visible image. At the time, the laser beam was oscillated in a radial direction of the optical disk and irradiated in plural times on approximately the identical paths to record the visible information. With the optical recording medium being rotated by the rotation mechanism, it is possible for the laser pickup of the recording layer 18 to irradiate the laser beam and record electronic information.
The absolute reflectance of portions of the visible information recording layer exposed to the laser and portions unexposed to the laser was measured for each of the optical recording media on which visible images had been recorded as set forth above. The following equation was then used to calculate the Sv, and the contrast was evaluated according to the following evaluation criteria.
[Equation 1]

$$Sv=\frac{\int_{410}^{720}|D(\lambda)-U(\lambda)|V(\lambda)d\lambda}{\int_{410}^{720}D(\lambda)V(\lambda)d\lambda}$$

$D(\lambda)$: Spectral reflectivity of the portion exposed to the laser beam [%]
$U(\lambda)$: Spectral reflectivity of the portion unexposed to the laser beam [%]
$V(\lambda)$: CIE standard spectral luminous efficiency

[Table 4]

| <Condition> | |
|---|---|
| (1) Drive drawing condition | |
| Laser wavelength | 660nm |
| NA | 0.66 |
| Drawing power | 8 mW |
| Rotation speed | 4500rpm (at constant angle rate) |
| Drawing time | 6 min |
| Swinging frequency | 200 Hz |
| Swinging width | 50 μm |
| Overwrite | 13 times |
| (2) Measurement condition by spectrophotometer (Absolute reflectance measured by spectrophotometer) | |
| Wavelength range | 410-720nm |
| Incident angle to sample surface | 5° |

CIE standard spectral luminous efficiency(according to Publication CIE No.18.2(1983),No41(1978))

| Wavelength λ [nm] | Luminous efficiency V(λ) | Wavelength λ [nm] | Luminous Efficiency V(λ) | Wavelength λ [nm] | Luminous efficiency V(λ) |
|---|---|---|---|---|---|
| 410 | 0.001210 | 515 | 0.608200 | 620 | 0.381000 |
| 415 | 0.002180 | 520 | 0.710000 | 625 | 0.321000 |
| 420 | 0.004000 | 525 | 0.793200 | 630 | 0.265000 |
| 425 | 0.007300 | 530 | 0.862000 | 635 | 0.217000 |
| 430 | 0.011600 | 535 | 0.914850 | 640 | 0.175000 |
| 435 | 0.016840 | 540 | 0.954000 | 645 | 0.138200 |
| 440 | 0.023000 | 545 | 0.980300 | 650 | 0.107000 |
| 445 | 0.029800 | 550 | 0.994950 | 655 | 0.081600 |
| 450 | 0.038000 | 555 | 1.000000 | 660 | 0.061000 |
| 455 | 0.048000 | 560 | 0.995000 | 665 | 0.044580 |
| 460 | 0.060000 | 565 | 0.978600 | 670 | 0.032000 |
| 465 | 0.073900 | 570 | 0.952000 | 675 | 0.023200 |
| 470 | 0.090980 | 575 | 0.915400 | 680 | 0.017000 |
| 475 | 0.112600 | 580 | 0.870000 | 685 | 0.011920 |
| 480 | 0.139020 | 585 | 0.816300 | 690 | 0.008210 |
| 485 | 0.169300 | 590 | 0.757000 | 695 | 0.005723 |
| 490 | 0.208020 | 595 | 0.694900 | 700 | 0.004102 |
| 495 | 0.258600 | 600 | 0.631000 | 705 | 0.002929 |
| 500 | 0.323000 | 605 | 0.566800 | 710 | 0.002091 |
| 505 | 0.407300 | 610 | 0.503000 | 715 | 0.001484 |
| 510 | 0.503000 | 615 | 0.441200 | 720 | 0.001047 |

< Standards for evaluation>

5 (Excellent contrast): equal to or greater than 0.25
4 (Good contrast): equal to or greater than 0.20 but less than 0.25
3 (Practically sufficient contrast): equal to or greater than 0.15 but less than 0.20
2 (Insufficient contrast): equal to or greater than 0.10 but less than 0.15
1 (Poor contrast): less than 0.10

[Table 5]

| Examples | Contrast Evaluation |
|---|---|
| Example 1 | 5 |
| Example 2 | 5 |
| Example 3 | 5 |
| Example 4 | 5 |
| Example 5 | 4 |
| Example 6 | 4 |
| Example 7 | 4 |
| Example 8 | 5 |
| Example 9 | 4 |
| Example 10 | 5 |
| Example 11 | 5 |
| Example 12 | 4 |
| Example 13 | 5 |
| Example 14 | 5 |
| Example 15 | 5 |
| Example 16 | 5 |
| Example 17 | 5 |
| Example 18 | 5 |
| Example 19 | 4 |
| Example 20 | 5 |

As shown in Table 5, the contrast of the visible information recording layer was extremely good and sharp image recording was possible in all of the optical recording media.

## BRIEF DESCRIPTION OF THE DRAWINGS

[Fig. 1] It shows an example of the optical recording medium of the present invention (as a schematic cross-section).
[Fig. 2] It shows an example of the path of the laser beam on the surface of the optical disk during image formation.
[Fig. 3] It is an enlarged view of the path of the laser beam in the portion delimited by the bold line in Fig. 2.

## EXPLANATIONS OF SYMBOLS

| | |
|---|---|
| 10: Optical recording medium | 12: Laser beam |
| 14: Visible image recording layer | 16: First support |
| 18: Recording layer | 20: First reflective layer |
| 22: Adhesive layer | 24: Second reflective layer |
| 26: Second support | 28: Pregroove |

## Claims

**1.** An optical recording medium comprising a visible information recording layer on a support, wherein said visible information recording layer comprises a dye denoted by the following general formula (I).

[Chem. 1] A=N-B Genera formula (I)

[In general formula (I), A is a substituted or unsubstituted heterocyclic group, substituted aliphatic group, or substituted or unsubstituted carbon ring group, and B is a substituted or unsubstituted heterocyclic group or a substituted or unsubstituted aryl group.]

**2.** The optical recording medium according to claim 1, wherein, in general formula (I), the group denoted by:

[Chem. 2] A=

is a group denoted by the following formula (A-1), (A-2), (A-3), (A-4), (A-5), (A-6), (A-7), (A-8), (A-9), (A-10), or (A-11).

[Chem. 3]

(A-1)

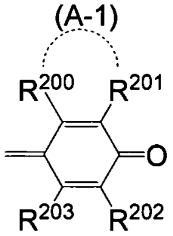

(A-2)

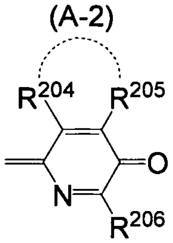

(A-3)

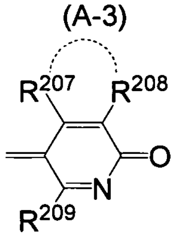

(A-4)

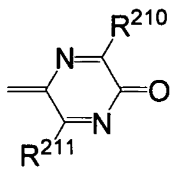

(A-5)

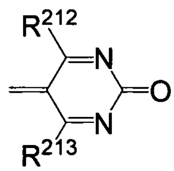

(A-6)

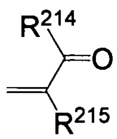

(A-7)

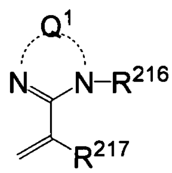

(A-8)

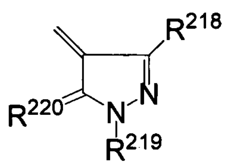

(A-9)

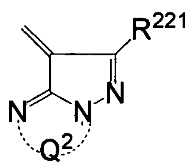

(A-10)

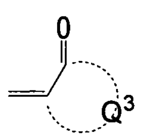

(A-11)

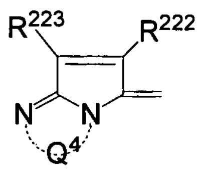

[In the above, $R^{200}$ to $R^{223}$ are each independently a hydrogen atom or a substituent, $R^{200}$ and $R^{201}$, $R^{204}$ and $R^{205}$, and $R^{207}$ and $R^{208}$ may be bonded together to form a ring, $Q^1$ denotes a group of nonmetal atoms required for formation of a ring with two nitrogen atoms adjacent to $Q^1$, $Q^2$ denotes a group of nonmetal atoms required for formation of a ring with two nitrogen atoms adjacent to $Q^2$, $Q^4$ denotes a group of nonmetal atoms required for formation of a ring with two nitrogen atoms adjacent to $Q^4$, and $Q^3$ denotes a group of nonmetal atoms required for formation of a ring with two carbon atoms adjacent to $Q^3$.]

3. The optical recording medium according to claim 2, wherein said substituent is an aliphatic group, aryl group, heterocyclic group, acyl group, acylamino group, aliphatic oxy group, aryloxy group, aliphatic oxycarbonyl group, carbamoyl group, aliphatic sulfonyl group, arylsulfonyl group, sulfamoyl group, aliphatic sulfonamide group, arylsulfonamide group, amino group, aliphatic amino group, arylamino group, heterocyclic amino group, carbamoylamino group, sulfamoylamino group, hydroxy group, or cyano group.

4. The optical recording medium according to any of claims 1 to 3, wherein, in general formula (I), the group denoted by:

[Chem. 4] B-

is a group denoted by the following formula (B-1), (B-2), (B-3), (B-4), (B-5), (B-6), (B-7), (B-8) or (B-9).

[Chem. 5]

(B-1)

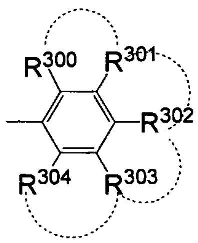

(B-2)

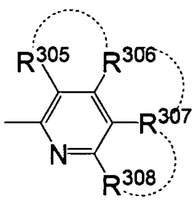

(B-3)

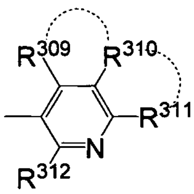

(B-4)

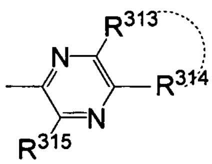

(B-5)

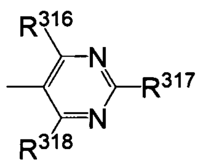

(B-6)

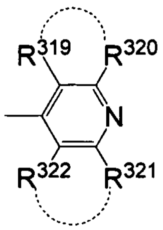

(B-7)

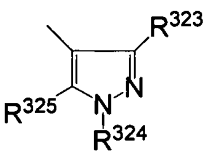

(B-8)

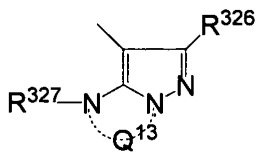

(B-9)

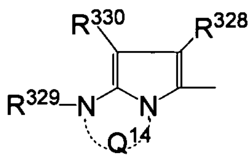

[In the above, $R^{300}$ to $R^{330}$ are each independently a hydrogen atom or a substituent, $R^{300}$ and $R^{301}$, $R^{301}$ and $R^{302}$, $R^{302}$ and $R^{303}$, $R^{303}$ and $R^{304}$, $R^{305}$ and $R^{306}$, $R^{306}$ and $R^{307}$, $R^{307}$ and $R^{308}$, $R^{309}$ and $R^{310}$, $R^{310}$ and $R^{311}$, $R^{313}$ and $R^{314}$, $R^{319}$ and $R^{320}$, and $R^{321}$ and $R^{322}$ may be bonded together to form a ring, $Q^{13}$ denotes a group of nonmetal atoms required for formation of a ring with two nitrogen atoms adjacent to $Q^{13}$, and $Q^{14}$ denotes a group of nonmetal atoms required for formation of a ring with two nitrogen atoms adjacent to $Q^{14}$.]

5. The optical recording medium according to claim 4, wherein the substituent is an aliphatic group, aryl group, acyloxy group, acylamino group, aliphatic oxy group, aliphatic sulfonyloxy group, arylsulfonyloxy group, aliphatic sulfonamide group, arylsulfonamide group, amino group, aliphatic amino group, arylamino group, aliphatic oxycarbonylamino group, aryloxycarbonylamino group, heterocyclic oxycarbonylamino group, hydroxy group, cyano group, sulfo group, carbamoylamino group, or sulfamoylamino group.

6. The optical recording medium according to claim 1, wherein the dye denoted by said general formula (I) is a dye denoted by the following general formula (100).

[Chem. 6]

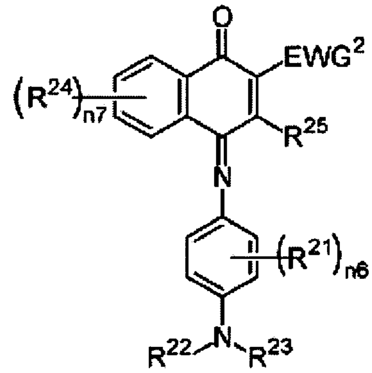

General formula (100)

[In general formula (100), $EWG^2$ denotes an electron-withdrawing group, $R^{21}$, $R^{22}$, $R^{23}$, and $R^{24}$ each independently denote a monovalent substituent, $R^{25}$ denotes a hydrogen atom or a monovalent substituent, n6 and n7 each independently denote an integer ranging from 0 to 4.]

**7.** The optical recording medium according to claim 1, wherein the dye denoted by said general formula (I) is a dye denoted by the following general formula (101).

[Chem. 7]

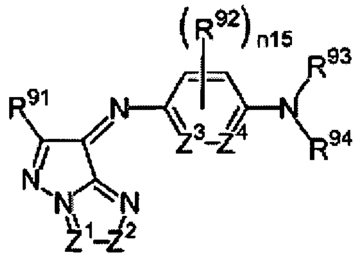

General formula (101)

[In general formula (101), $R^{91}$ denotes a hydrogen atom or a monovalent substituent, $R^{93}$ and $R^{94}$ each independently denote a substituted or unsubstituted alkyl group, substituted or unsubstituted aryl group, or substituted or unsubstituted heterocyclic group, $R^{92}$ denotes a monovalent substituent, n15 denotes an integer ranging from 0 to 2, among $Z^1$ and $Z^2$, one denotes =N-, and the other denotes $=C(R^{95})-$, $Z^3$ and $Z^4$ each independently denote =N- or $=C(R^{96})-$, $R^{95}$ and $R^{96}$ each independently denote a hydrogen atom or a monovalent substituent.]

**8.** The optical recording medium according to claim 1, wherein the dye denoted by said general formula (I) is a dye denoted by the following general formula (102).

[Chem. 8]

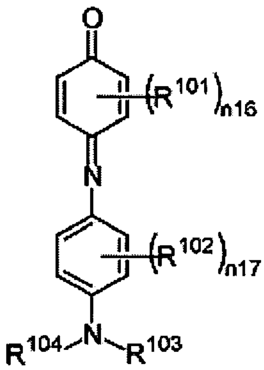

General formula (102)

[In general formula (102), $R^{103}$ and $R^{104}$ each independently denote a substituted or unsubstituted alkyl group, substituted or unsubstituted aryl group, or substituted or unsubstituted heterocyclic group, $R^{101}$ and $R^{102}$ each independently denote a monovalent substituent, n16 and n17 each independently denote an integer ranging from 0 to 4.]

**9.** The optical recording medium according to claim 1, wherein the dye denoted by said general formula (I) is a dye denoted by the following general formula (103).

[Chem. 9]

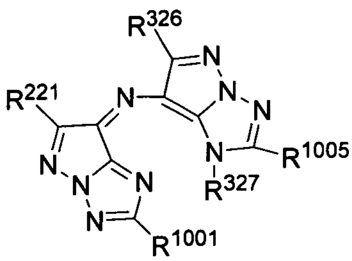

General formula (103)

[In general formula (103), $R^{221}$, $R^{326}$, $R^{327}$, $R^{1001}$, and $R^{1005}$ each independently denote a hydrogen atom or substituent.]

**10.** The optical recording medium according to claim 1, wherein the dye denoted by said general formula (I) is a dye denoted by the following general formula (104).

[Chem. 10]

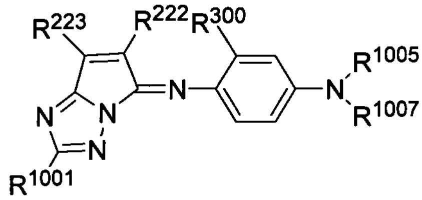

General formula (104)

[In general formula (104), $R^{222}$, $R^{223}$, $R^{300}$, $R^{1001}$, and $R^{1005}$ each independently denote a hydrogen atom or a

substituent, and $R^{1007}$ denotes a substituent.]

**11.** The optical recording medium according to claim 1, wherein the dye denoted by said general formula (I) is a dye denoted by the following general formula (105).

[Chem. 11]

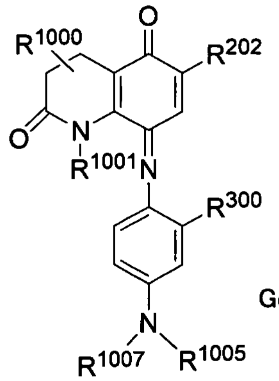

General formula (105)

[In general formula (105), $R^{202}$, $R^{300}$, $R^{1001}$, and $R^{1005}$ each independently denote a hydrogen atom or a substituent, $R^{1000}$ and $R^{1007}$ each independently denote a substituent.]

**12.** The optical recording medium according to claim 1, wherein the dye denoted by said general formula (I) is a dye denoted by the following general formula (106).

[Chem. 12]

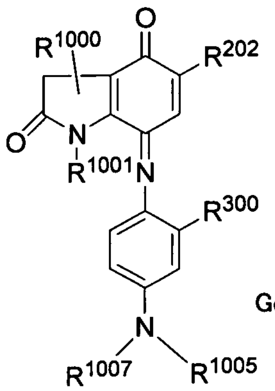

General formula (106)

[In general formula (106), $R^{202}$, $R^{300}$, $R^{1001}$ and $R^{1005}$ each independently denote a hydrogen atom or a substituent, $R^{1000}$ and $R^{1007}$ each independently denote a substituent.]

**13.** The optical recording medium according to any of claims 1 to 12, which further comprises a recording layer capable of recording and/or reproducing information by irradiation of a laser beam.

**14.** The optical recording medium of claim 13, which comprises a first support, said recording layer, a reflective layer, said visible information recording layer, and a second support in this order.

**15.** The optical recording medium according to any of claims 1 to 14, which is disk-shaped.

**16.** A method of recording visible information on said visible information recording layer of the optical recording medium

according to any of claims 13 to 15, wherein
the visible information is recorded by using the same laser bean as that used in recording on the recording layer capable of recording and/or reproducing information by irradiation of a laser beam.

**17.** A method of recording visible information on said visible information recording layer of the optical recording medium of claim 15, wherein
the visible information is recorded by using a laser beam that oscillates in a radial direction of the optical recording medium as well as is irradiated plural times on approximately identical paths.

[Fig. 1]

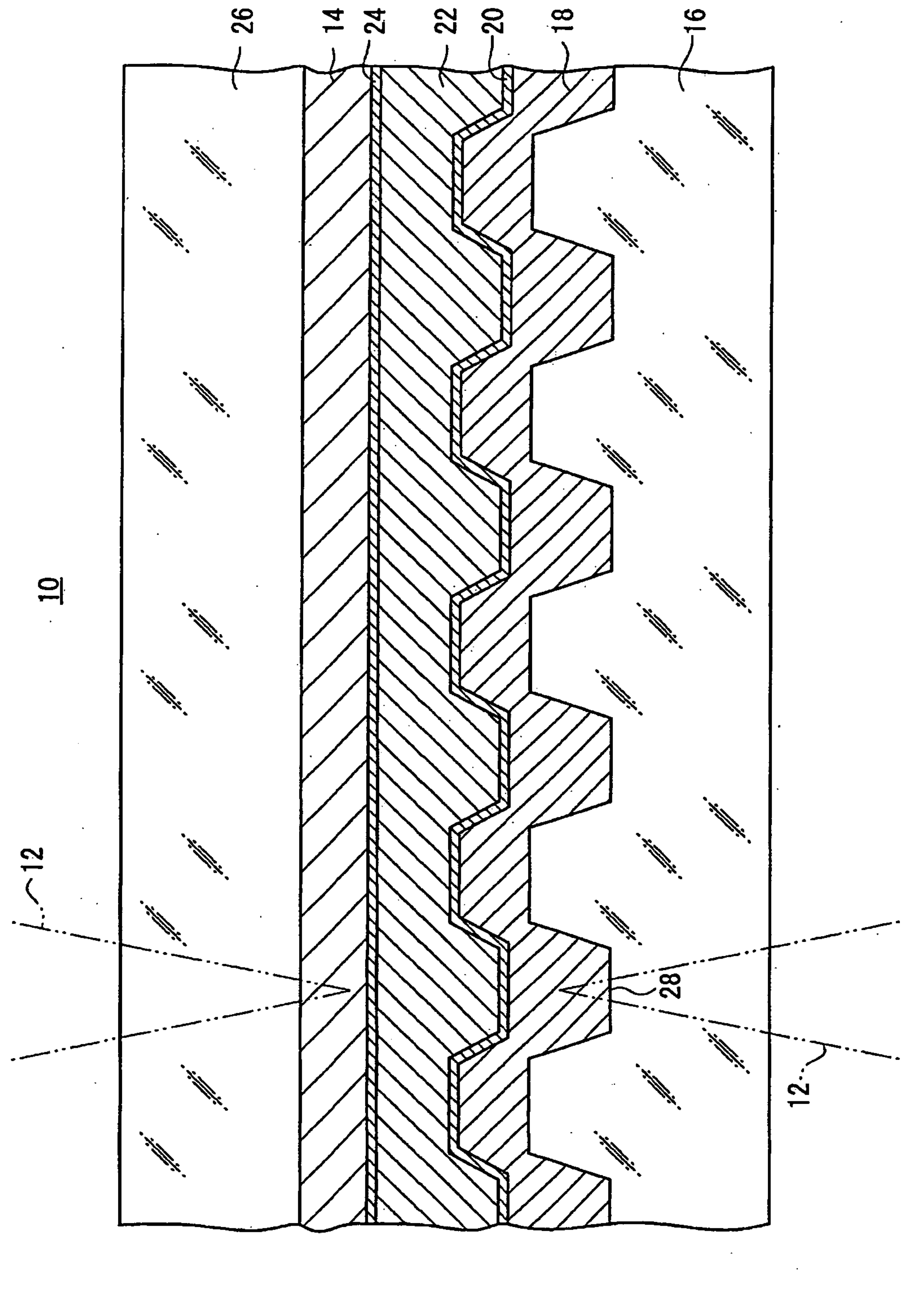

[Fig. 2]

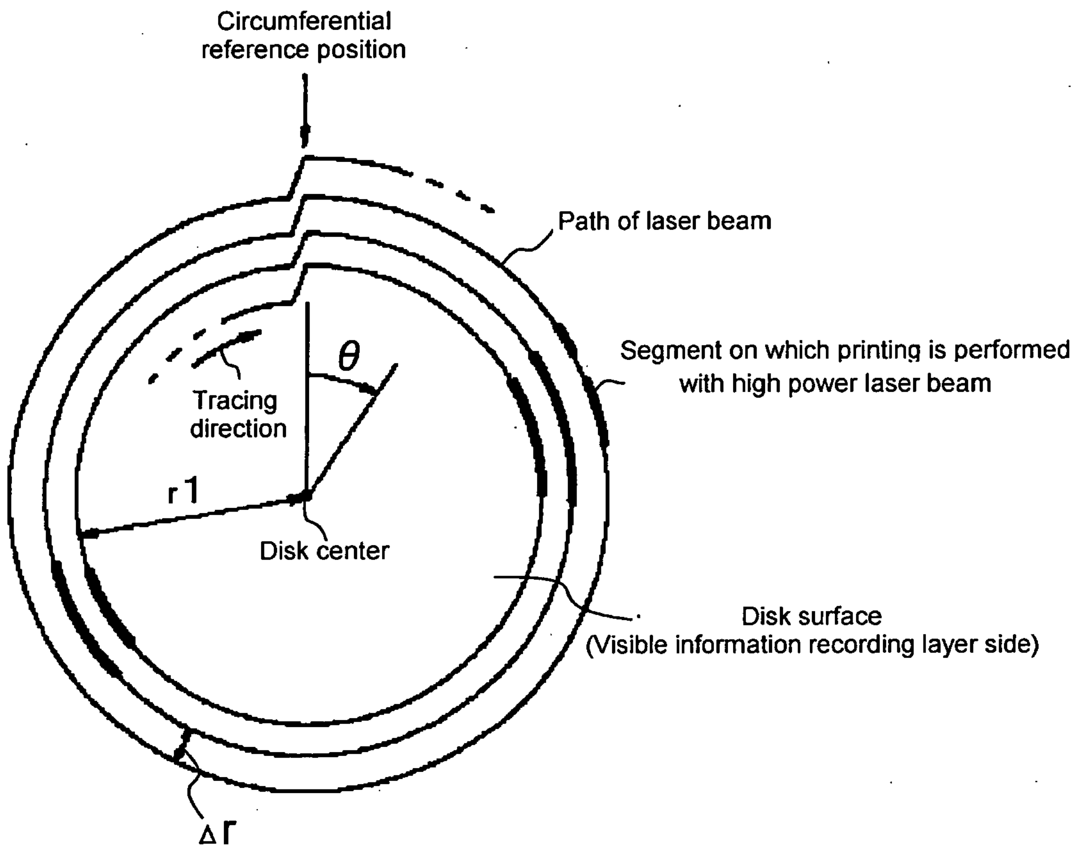
Circumferential
reference position
Path of laser beam
Segment on which printing is performed
with high power laser beam
θ
Tracing
direction
r1
Disk center
Disk surface
(Visible information recording layer side)
Δr

[Fig. 3]

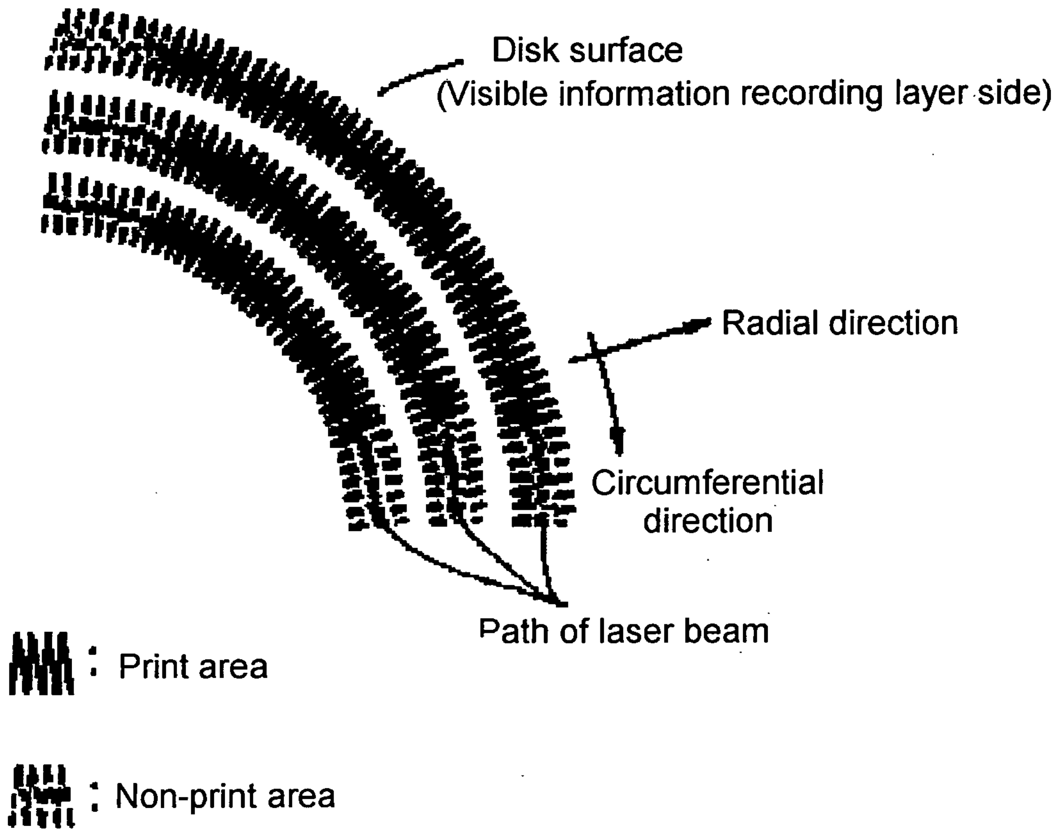
Disk surface
(Visible information recording layer side)
Radial direction
Circumferential direction
Path of laser beam
: Print area
: Non-print area

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006080386 A
- JP 2006265136 A
- JP 11066617 A
- JP 2001342364 A
- JP 2004051873 A
- JP 61031292 A
- US 4829047 A
- US 059442 A
- US 3770370 A
- DE 2316755
- JP 7137455 A
- JP 4074690 A
- JP 8127174 A
- JP 11053758 A
- JP 11334204 A
- JP 11334205 A
- JP 11334206 A
- JP 11334207 A
- JP 2000043423 A
- JP 2000108513 A
- JP 2000158818 A
- JP 2003203348 A
- JP 2003242750 A
- JP 2002203321 A

### Non-patent literature cited in the description

- The Theory of the Photographic Process. Macmillan Corp, 1977, 198
- Lange's Handbook of Chemistry. McGraw-Hill, 1979
- The Domain of Chemistry. Nankodo, 96-103
- *J. Chem. Soc. Perkin transfer I,* 1977, 2047
- **CHAMPAN.** *Merocyanine Dye-Donor Element Used in Thermal Dye Transfer*